# EUROPEAN PATENT SPECIFICATION

(11) **EP 3 992 734 B1**
(45) Date of publication and mention of the grant of the patent: **27.05.2026**
(21) Application number: 20830845.2
(22) Date of filing: 05.03.2020
(51) Int. Cl.: G05B 19/042, G06F 21/44, G06F 21/64, G05B 19/05, G06F 21/12

(54) **CONTROL SYSTEM, CONTROL DEVICE, AND MANAGEMENT METHOD**
STEUERSYSTEM, STEUERVORRICHTUNG UND VERWALTUNGSVERFAHREN
SYSTÈME DE COMMANDE, DISPOSITIF DE COMMANDE ET PROCÉDÉ DE GESTION

(30) Priority: 26.06.2019 JP 2019118838
(43) Date of publication of application: 04.05.2022
(73) Proprietor: OMRON Corporation, Shiokoji-dori, Shimogyo-Ku Kyoto-shi Kyoto 600-8530 (JP)
(72) Inventor: WATANABE, Yasuhisa, Kyoto-shi, Kyoto 600-8530 (JP); HIROBE, Naoki, Kyoto-shi, Kyoto 600-8530 (JP); KITAMURA, Yasuhiro, Kyoto-shi, Kyoto 600-8530 (JP)
(74) Representative: Mewburn Ellis LLP
(86) International application number: PCT/JP2020/009298
(87) International publication number: WO 2020/261654

(56) References cited:
- JP-A- 2007 148 806
- JP-A- 2007 148 806
- JP-A- 2009 070 144
- JP-A- 2009 070 144
- JP-A- 2013 239 036
- JP-A- 2013 239 036

## Description

### TECHNICAL FIELD

The present invention relates to a control system including a plurality of control devices capable of communicating with each other, a control device included in the control system, and a management method performed by the control system.

### BACKGROUND ART

In various manufacturing sites, control devices such as programmable logic controllers (PLC) have been introduced. Such a control device is a kind of computer and executes a control program designed for manufacturing devices, manufacturing equipment, and the like.

Recently, there have been cases where a control program is extracted from a control device that has been in operation at a manufacturing site, a new control device is created at another manufacturing site, and the control program thus extracted is used.

Japanese Patent Laying-Open No. 2008-065678 (PTL 1) discloses a method for addressing such a problem. Specifically, PTL 1 discloses a method by which a PLC determines whether a program obtained as a result of encrypting a control program is unique to facility equipment, deciphers, when the program is unique to the facility equipment, the program back to the control program, and executes the control program to control the facility equipment.

JP2013239036A discloses a control system in which, a license file issue device includes: identifier acquisition means which, from a recording medium, acquires a unique identifier of the recording medium; and license file generation means which generates a license file including the unique identifier and validity information of the license file. A control device includes: identifier acquisition means which, from a recording medium in which the license file is stored, acquires a unique identifier of the recording medium; and license file authentication means which compares the unique identifier acquired from the license file with the unique identifier acquired by the identifier acquisition means, and if they are coincident with each other, and also, which compares the validity information acquired from the license file with the current date and time, and if the license file is within the valid period, which determines that there is execution authority with respect to a user program.

JP2007148806A discloses an application starting restriction method that has: a step for deciding whether the application installed to an information processor having a storage part storing information and a communication part having a unique number is started for the first time or not; steps for acquiring the unique number from the communication part when deciding that the application is started for the first time, and storing the acquired unique number into the storage part; steps for acquiring the unique number from the communication part when deciding that the application is not started for the first time, and deciding whether the acquired unique number and the stored unique number accord or not; a step for permitting the start of the application when deciding that the acquired unique number and the stored unique number accord; and a step forbidding the start of the application when deciding that the acquired unique number and the stored unique number do not accord.

JP2009070144A discloses a programming method in a PLC in which a prescribed address of an input/output memory in which hardware unique data appear is set to the first operand of a general comparison instruction, and the hardware unique data of a PLC in which a protection object program section should be operated is set to a second operand, and the projection object program section is made executable by using the execution result of the general comparison instruction as input conditions, and the whole program section is replaced with a function block for display protection.

### CITATION LIST

### PATENT LITERATURE

PTL 1: Japanese Patent Laying-Open No. 2008-065678

### SUMMARY OF INVENTION

### TECHNICAL PROBLEM

Under the method disclosed in PTL 1, however, the use of the control program is permitted when information on the facility equipment is tampered with as if serving as unique facility equipment for executing the control program. That is, the tampering with the information on the facility equipment to which the control program is applied makes the control program usable, so that the control program is made adaptable relatively easily. That is, the method disclosed in PTL 1 has room for improvement in protecting the control program, which is an intellectual property.

It is therefore an object of the present invention is to protect a control program, which is an intellectual property.

### SOLUTION TO PROBLEM

According to a first aspect of the present invention, there is provided a control system as specified in claim 1.

According to this configuration, each security engine manages the first unique information created in advance with the first unique information contained in the shared information that is stored in the form of a distributed ledger and is thus tamper-resistant. Each security engine compares, with the first unique information thus managed, the second unique information created in response to the request for starting the execution of the control program and determines whether the execution of the control program is permitted based on the comparison result. This makes it possible to prevent the start of the control program in an environment different from the environment where the shared information is stored and managed by the security engine. Further, since the security engine determines whether the execution of the control program is permitted based on the comparison result from each of the at least two comparison means, the execution of the control program is not permitted unless not only the runtime environment of the control program but also the configuration of the adjacent control device is imitated. As a result, it is possible to protect the control program, which is an intellectual property.

In the above-described disclosure, the storage means may handle, as one transaction, information containing the first unique information and an identifier that can identify a security engine that has created the first unique information with the first unique information and the identifier associated with each other.

According to this disclosure, since the information containing the first unique information is handled as one transaction, the first unique information can be easily referred to when the comparison means makes a comparison.

In the above-described disclosure, the comparison means may compare the second unique information created by the own control device with the shared information stored in the security engine of the own control device.

When the second unique information is exchanged between the comparison means, there is a possibility that the second unique information is tampered with and the execution of the control program is permitted, but, according to the disclosure, the comparison means need not transmit the second unique information to the comparison means of another control device, so that the security of the unique information can be made higher.

In the above-described disclosure, the comparison means may compare the second unique information created by the own control device with each piece of the shared information stored in each of at least two security engines and obtain a comparison result based on a result of the comparison with each piece of the shared information.

According to this disclosure, since the plurality of pieces of shared information are used for comparison, a comparison result with high reliability can be obtained.

In the above-described disclosure, the control device may include a plurality of devices. The plurality of devices may include a control unit having the control engine and a security unit having the security engine.

According to this disclosure, a control engine that needs to allow the control program to be modified freely, and a security engine that is undesirable to be modified freely are each implemented by a different device, thereby enabling device design based on characteristics of each engine.

In the above-described disclosure, the security unit includes a system program configured to implement a basic function of the security unit. The security engine may be a function implemented via the execution of the system program.

According to this disclosure, when the function of the security unit is copied, the function of the security program is copied accordingly. As a result, the shared information thus stored is also copied, and the control program can be prevented from being executed in an environment other than the environment where the security program has been executed.

In the above-described disclosure, when the comparison result obtained as a result of the comparison request issued to the comparison means of the own control device in response to the request for starting the execution of the control program satisfies a prescribed condition, the permission means may issue the comparison request to the comparison means of another one of the security engines.

According to this disclosure, it is not necessary to issue the comparison request to other control devices more than necessary and thus makes the processing of the control system simple as a whole.

According to a second aspect of the present invention, there is provided a control device as specified in claim 8.

According to this configuration, the security engine manages the first unique information created in advance with the first unique information contained in the shared information that is stored in the form of a distributed ledger and is thus tamper-resistant. The security engine compares, with the first unique information thus managed, the second unique information created in response to the request for starting the execution of the control program and determines whether the execution of the control program is permitted based on the comparison result. This makes it possible to prevent the start of the control program in an environment different from the environment where the shared information is stored and managed by the security engine. Further, since the security engine determines whether the execution of the control program is permitted based on the comparison result from each of the at least two comparison means, the execution of the control program is not permitted unless not only the runtime environment of the control program but also the configuration of the adjacent control device is imitated. As a result, it is possible to protect the control program, which is an intellectual property.

According to a third aspect of the present invention there is provided a management method as specified in claim 9.

According to this configuration, the first unique information created in advance is managed with the first unique information contained in the shared information that is stored in the form of a distributed ledger and is thus tamper-resistant. The second unique information created in response to the request for starting the execution of the control program is compared with the first unique information thus managed.
Whether the execution of the control program is permitted is determined based on the comparison result. This makes it possible to prevent the start of the control program in an environment different from the environment where the shared information is stored and managed. Further, since whether the execution of the control program is permitted is determined based on the comparison result from each of at least two comparison means, the execution of the control program is not permitted unless not only the runtime environment of the control program but also the configuration of the adjacent control device is imitated. As a result, it is possible to protect the control program, which is an intellectual property.

### ADVANTAGEOUS EFFECTS OF INVENTION

According to the present invention, it is possible to protect a control program, which is an intellectual property.

### BRIEF DESCRIPTION OF DRAWINGS

Fig. 1 is a diagram illustrating an example where a control system 1X according to an embodiment is applied.
Fig. 2 is a diagram schematically illustrating an overall configuration of a control system 1.
Fig. 3 is a diagram schematically illustrating an example of a hardware configuration of a control unit 100 that is a part of a control device 10 according to the present embodiment.
Fig. 4 is a diagram schematically illustrating an example of a hardware configuration of a security unit 200 that is part of control device 10 according to the present embodiment.
Fig. 5 is a diagram illustrating a flow of a method for determining whether the execution of a control program 140 is permitted.
Fig. 6 is a block diagram illustrating examples of functional configurations of control unit 100 and security unit 200.
Fig. 7 is a diagram illustrating shared information 30.
Fig. 8 is a diagram illustrating a functional configuration of security unit 200 that is activated when a new block 40 is created.
Fig. 9 is a sequence diagram illustrating a processing sequence performed upon receipt of a request for starting the execution of the control program.
Fig. 10 is a diagram illustrating an example where the execution of the control program is permitted.
Fig. 11 is a diagram illustrating an example where the execution of the control program is prohibited.
Fig. 12 is a sequence diagram illustrating a modification of the processing sequence performed upon receipt of the request for starting the execution of the control program.
Fig. 13 is a diagram illustrating a processing sequence of a first modification of a method for comparing system hash values.
Fig. 14 is a diagram illustrating a processing sequence of a second modification of the method for comparing system hash values.

### DESCRIPTION OF EMBODIMENTS

Hereinafter, embodiments according to the present invention will be described with reference to the drawings. In the following description, the same parts and components are denoted by the same reference numerals. Their names and functions are also the same. Therefore, details of such parts and components will not be repeatedly described. Note that the embodiments and modifications described below may be selectively combined as needed.

### §1. Application example

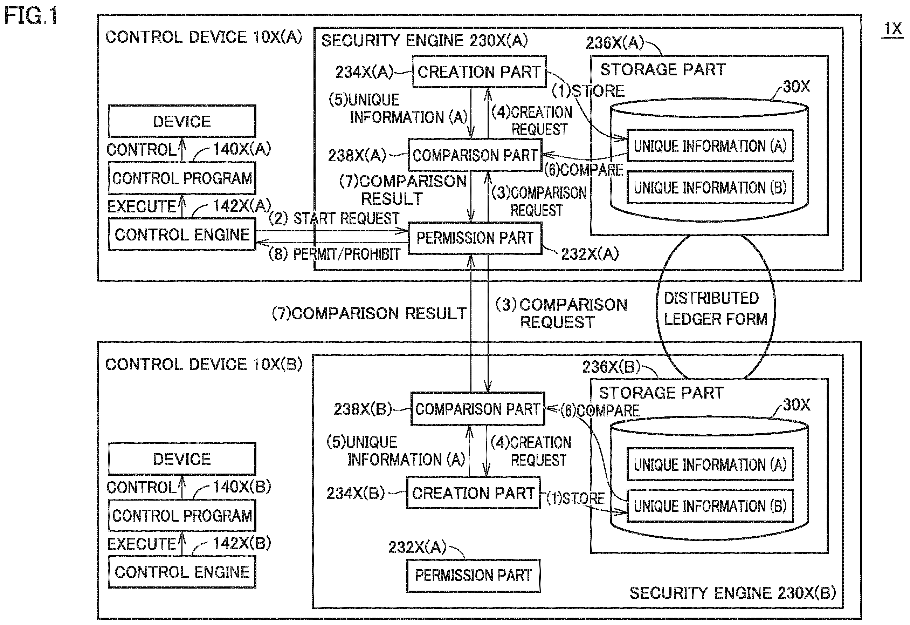

An outline of a control system according to the present embodiment will be described. Fig. 1 is a diagram illustrating an example where a control system 1X according to an embodiment is applied. Referring to Fig. 1, control system 1X includes a plurality of control devices 10X(A), 10X(B) capable of communicating with each other. Hereinafter, control device 10X(A) and control device 10X(B) are also collectively referred to as a control device 10X. In Fig. 1, a reference numeral to which (A) is appended denotes a component belonging to control device 10X(A). A reference numeral to which (B) is appended denotes a component belonging to control device 10X(B).

Control device 10X includes a control engine 142X that executes a control program 140X for controlling a control target and a security engine 230X that manages whether the execution of control program 140X by control engine 142X is permitted.

Control device 10X includes a plurality of devices, and control program 140X is executed to control each of the devices, thereby controlling the control target such as manufacturing equipment.

Security engine 230X includes a permission part 232X, a creation part 234X, a storage part 236X, and a comparison part 238X.

Upon receipt of a request for starting the execution of control program 140X from control engine 142X, permission part 232X determines whether the execution of control program 140X is permitted.

Creation part 234X creates unique information indicating the configuration of one or a plurality of devices making up control device 10X. The unique information is information defined based on the devices making up control device 10X and changes in a manner that depends on a change to the configuration of control device 10X. The configuration is defined by at least either a device type or a device connection topology. The classification of the device types may include classification by device function, classification by model type, and classification by serial number.

Storage part 236X stores shared information 30X containing at least the unique information created in advance for each control device 10X in the form of a distributed ledger so as to share shared information 30X with other control devices 10X. For example, focusing on storage part 236X(A), storage part 236X(A) stores shared information 30X containing unique information (A) and unique information (B) created in advance for control devices 10X(A), 10X(B) in the form of a distributed ledger so as to share shared information 30X with control device 10X(B).

That is, control device 10X(A) and control device 10X(B) each store common shared information 30X. Shared information 30X is stored in the form of a distributed ledger and is thus tamper-resistant.

Comparison part 238X compares the unique information on one control device 10X created in response to a comparison request with corresponding unique information on control device 10X contained in shared information 30X. For example, focusing on control device 10X(A), comparison part 238X(A) compares the unique information (A) created upon receipt of the comparison request with the unique information (A) contained in shared information 30X. The comparison means a determination of coincidence or non-coincidence.

Next, in order from (1) illustrated in Fig. 1, a management method for managing whether the execution of the control program by control system 1X is permitted will be described.
(1) Creation part 234X(A) creates unique information (A) on its own control device 10X(A) in advance. Storage part 236X(A) stores shared information 30X containing unique information (A) created in advance so as to share shared information 30X with storage part 236X(B).
   Likewise, creation part 234X(B) creates unique information (B) on its own control device 10X(B) in advance. Storage part 236X(B) stores shared information 30X containing unique information (B) created in advance so as to share shared information 30X with storage part 236X(A).
(2) Permission part 232X (A) receives a request for starting the execution of control program 140X(A). Note that, in the example illustrated in Fig. 1, control engine 142X issues the start request, but security engine 230X may include a receiver that receives the start request.
(3) Permission part 232X(A) issue a comparison request to both comparison part 238X(A) and comparison part 238X(B). Note that, in a configuration where the control system includes at least three control devices, the permission part need not issue the comparison request to all the control devices, and needs to issue the comparison request to only at least two control devices storing shared information. Further, the at least two control devices need not necessarily include the own control device.
(4) Upon receipt of the comparison request, comparison part 238X(A) issues a request for creating unique information (A) to creation part 234X(A). Likewise, upon receipt of the comparison request, comparison part 238X(B) issues a request for creating unique information (B) to creation part 234X(B).
(5) Upon receipt of the creation request, creation part 234X(A) creates unique information (A) on control device 10X(A) and provides unique information (A) to comparison part 238X(A). Likewise, upon receipt of the creation request, creation part 234X(B) creates unique information (B) on control device 10X(B) and provides unique information (B) to comparison part 238X(B). That is, creation part 234X further creates unique information upon receipt of the comparison request.
(6) Comparison part 238X(A) compares unique information (A) created in advance and contained in shared information 30X with unique information (A) created upon receipt of the comparison request by creation part 234X(A) in (5) to obtain a comparison result. Likewise, comparison part 238X(B) compares unique information (B) created in advance and contained in shared information 30X with unique information (B) created upon receipt of the comparison request by creation part 234X(B) in (5) to obtain a comparison result.
(7) Comparison part 238X(A) and comparison part 238X(B) each provide the comparison result thus obtained to permission part 232X(A). Permission part 232X(A) permits, based on the comparison results provided by comparison parts 238X(A), 238X(B), the execution of control program 140X(A) when the comparison results satisfy a prescribed condition. Note that the prescribed condition may be freely designed, and examples of the prescribed condition include a condition of all the comparison results coinciding with each other, a condition of a predetermined number of comparison results out of the comparison results coinciding with each other, a condition of comparison results obtained from specific control devices coinciding with each other, and the like.
(8) Permission part 232X(A) provides, to control engine 142X(A), a determination result (permission or prohibition) based on the comparison result. Control engine 142X(A) controls control program 140X(A) in accordance with the determination result provided by permission part 232X(A).

As described above, according to the present embodiment, each security engine 230X manages unique information created in advance with the unique information contained in shared information 30X that is stored in the form of a distributed ledger and is thus tamper-resistant. Each security engine 230X compares, with the unique information thus managed, the unique information created when the control program is started, and determines whether the execution of the control program is permitted based on the comparison result. It is therefore possible to prevent the start of the control program in an environment different from an environment under the control of security engine 230X.

Further, according to the present embodiment, not only the configuration of the own control device but also the configuration of another control device communicatively connected to the own control device serve as comparison targets. Therefore, for example, when a malicious person attempts to imitate the runtime environment of the control program, it is necessary not only to copy both the hardware and software of the own control device but also to copy both the hardware and software of another control device communicatively connected to the own control device. This makes it possible to protect the control program, which is an intellectual property.

### §2. Specific example

### <A. Control system>

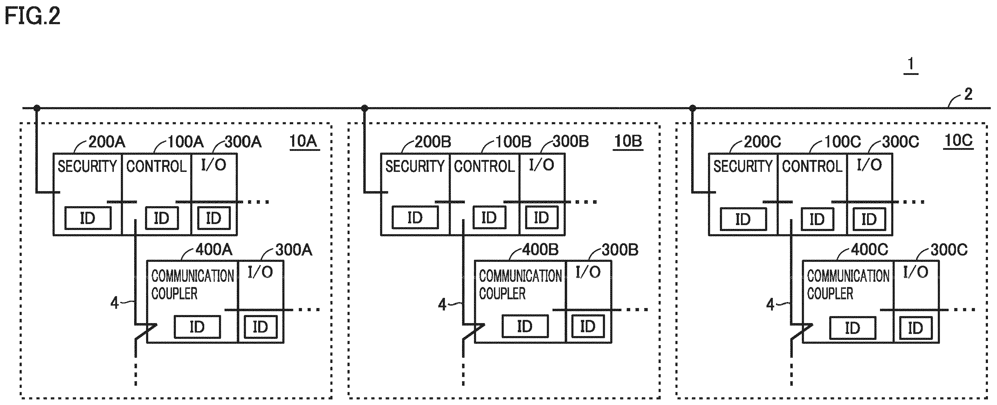

Fig. 2 is a diagram schematically illustrating an overall configuration of a control system 1. Referring to Fig. 2, control system 1 includes control devices 10A, 10B, 10C. Hereinafter, when control devices 10A, 10B, 10C need not be distinguished from each other, control devices 10A, 10B, 10C are simply referred to as control device 10. Further, control units 100A, 100B, 100C, security units 200A, 200B, 200C, I/O units 300A, 300B, 300C, and communication couplers 400A, 400B, 400C are also simply referred to as a control unit 100, a security unit 200, an I/O unit 300, and a communication coupler 400, respectively, when they need not be distinguished from each other.

Note that control system 1 illustrated in Fig. 2 includes three control devices 10, but control system 1 may include two control devices 10 or alternatively may include at least four control devices 10.

Each control device 10 controls a control target. The control target includes various industrial equipment for automating a production process, and includes a device that gives some physical action to a manufacturing device, a production line, or the like (hereinafter, collectively referred to as a "field"), and an input/output device that exchanges information with the field. Note that the entire production line may be set as a control target.

Control devices 10 are communicatively connected to each other over an information system network 2. Examples of information system network 2 include a network adhering to a communication standard such as EtherNET (registered trademark) or Object Linking and Embedding for Process Control Unified Architecture (OPC UA) that allows the exchange of data without depending on a vendor or a type of an operating system (OS).

Control device 10 includes a plurality of devices. In the example illustrated in Fig. 2, control device 10 includes control unit 100, security unit 200, input/output (I/O) unit 300, communication coupler 400, and the like. Hereinafter, the units and the communication coupler making up control device 10 are also collectively referred to as a "device".

Control unit 100 is an example of a control device that is a part of control device 10 and executes the control program for controlling a control target to perform core processing of control device 10.

Security unit 200 is an example of a security device that is a part of control device 10 and manages whether the execution of the control program by control unit 100 is permitted. The management method for managing whether the execution of the control program is permitted will be described later.

Control unit 100 and security unit 200 are connected to each other over, for example, any given data transmission channel (for example, PCI Express, EtherNET (registered trademark), or the like).

I/O unit 300 is an example of a device that is a part of control device 10 and is a unit responsible for general input/output processing. I/O unit 300 collects detection values from IO devices including various sensors, various switches, an encoder, and the like.

Control unit 100 and I/O unit 300 are communicatively connected to each other over an internal bus. Control unit 100 performs, in accordance with the control program, a mathematical operation using the detection values collected by I/O unit 300 and outputs a value of the operation result to I/O unit 300.

Communication coupler 400 is communicatively connected to control unit 100 over a field network 4. Communication coupler 400 is responsible for data transmission over field network 4. Communication coupler 400 is communicatively connected to one or a plurality of I/O units 300 over the internal bus, for example. The detection value collected by each of one or a plurality of I/O units 300 connected to communication coupler 400 is output to control unit 100 over field network 4.

Typically, any industrial Ethernet (registered trademark) is applicable to field network 4. As industrial Ethernet (registered trademark), for example, EtherCAT (registered trademark), Profinet IRT, MECHATROLINK (registered trademark)-III, PowerLink, SERCOS (registered trademark)-III, CIP Motion, and the like are known, and any of them may be applied. Further, a field network other than Industrial Ethernet (registered trademark) may be applied. For example, when motion control is not required, DeviceNet, CompoNet/IP (registered trademark), or the like may be applied.

The devices making up control device 10 each have an identification data ID. Typically, identification data ID is a model, a serial number, or the like, and is information preset for each device.

Note that the devices making up control device 10 are not limited to the devices illustrated in Fig. 2. The devices making up control device 10 may include, for example, a power supply unit that supplies power, a special unit having a capability that is not supported by I/O unit 300, a safety unit that provides a safety function for preventing personal safety from being threatened by a facility, equipment, or the like. Further, the devices making up control device 10 may include, for example, a human machine interface (HMI) that presents various types of information obtained via a control operation performed by control unit 100 or another unit to the operator and creates an internal command or the like for control unit 100 or another unit in accordance with an operation made by the operator.

### <B. Hardware configuration>

Examples of hardware configurations of main devices making up control device 10 according to the present embodiment will be described.

### (b1. Control unit)

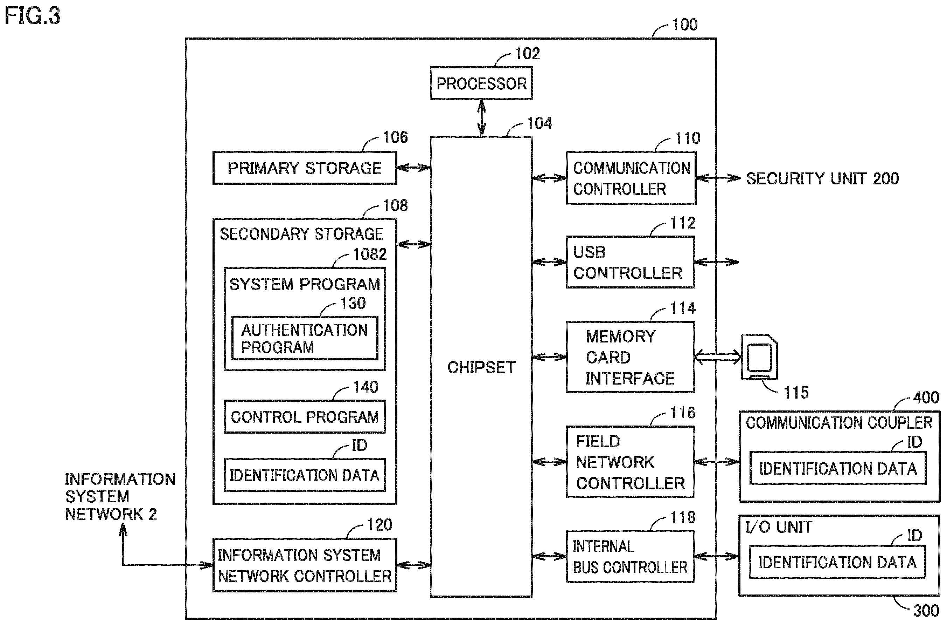

Fig. 3 is a diagram schematically illustrating an example of a hardware configuration of control unit 100 that is a part of control device 10 according to the present embodiment. Referring to Fig. 3, control unit 100 includes, as main components, a processor 102 such as a central processing unit (CPU) or a graphical processing unit (GPU), a chipset 104, a primary storage 106, a secondary storage 108, a communication controller 110, a USB controller 112, a memory card interface 114, a field network controller 116, an internal bus controller 118, and an information system network controller 120.

Processor 102 reads various programs stored in secondary storage 108 or a memory card 115, loads the programs into primary storage 106, and executes the programs so as to perform the control operation for controlling a control target and processing in response to the request for starting the execution of control program 140 as will be described later.

Primary storage 106 includes a volatile storage device such as a dynamic random access memory (DRAM) or a static random access memory (SRAM). Secondary storage 108 includes, for example, a non-volatile storage device such as a hard disk drive (HDD) or a solid state drive (SSD).

Chipset 104 arbitrates the exchange of data between processor 102 and each component so as to allow the processing on entire control unit 100 to be performed.

Secondary storage 108 stores control program 140 created to adapt to a control target such as a facility or equipment, and identification data ID for identifying control unit 100, in addition to a system program 1082 for implementing a basic function of control unit 100.

System program 1082 includes an authentication program 130. Authentication program 130 is a program that is executed during the startup of control program 140 to issue, to security unit 200, a request for permission to execute control program 140 being started. Further, system program 1082 provides a function as a control engine that executes control program 140.

Control program 140 is, for example, an intellectual property having a basic algorithm developed by a program development company. For example, the user sets a parameter suitable for control device 10 to create an environment where control program 140 provided by the program development company can be executed.

Communication controller 110 is responsible for the exchange of data with security unit 200. As communication controller 110, a communication chip compliant with PCI Express, Ethernet (registered trademark), or the like can be used, for example.

USB controller 112 is responsible for the exchange of data with any information processor over a USB connection. Such an information processor includes, for example, a support device that provides the user with functions such as creation, editing, debugging of control program 140, and setting of various parameters.

Memory card interface 114 is configured to receive, in a detachable manner, memory card 115, which is an example of a storage medium. Memory card interface 114 allows data such as control program 140 or various settings to be written to memory card 115 or allows data such as control program 140 or various settings to be read from memory card 115.

Field network controller 116 controls the exchange of data with other devices over field network 4.

Internal bus controller 118 controls the exchange of data with other devices (such as I/O unit 300) over the internal bus. To the internal bus, a communication protocol unique to a manufacturer may be applied, or a communication protocol that is the same as or compliant with any of the industrial network protocols may be applied.

Information system network controller 120 controls the exchange of data with other control devices 10 over information system network 2.

Fig. 3 illustrates a configuration example where processor 102 executes a program to provide necessary functions, but some or all of the functions thus provided may be implemented by a dedicated hardware circuit (for example, ASIC or FPGA). Alternatively, a core part of control unit 100 may be implemented by hardware having a general-purpose architecture (for example, an industrial personal computer based on a general-purpose personal computer). In such a configuration, a plurality of operating systems having different uses may be executed in parallel using a virtualization technology, and a necessary application may be executed on each OS.

### (b2. Security unit)

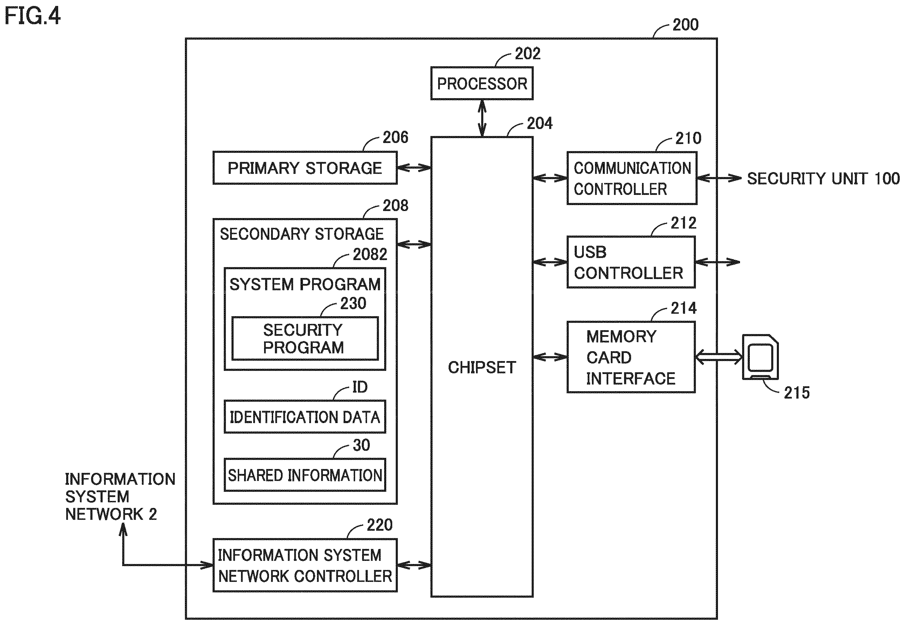

Fig. 4 is a diagram schematically illustrating an example of a hardware configuration of security unit 200 that is a part of control device 10 according to the present embodiment. Referring to Fig. 4, security unit 200 includes, as main components, a processor 202 such as a CPU or GPU, a chipset 204, a primary storage 206, a secondary storage 208, a communication controller 210, a USB controller 212, a memory card interface 214, and an information system network controller 220.

Processor 202 reads various programs stored in secondary storage 208 or a memory card 215, loads the programs into primary storage 206, and executes the programs so as to implement a function of managing whether the execution of the control program by control unit 100 is permitted. Primary storage 206 includes a volatile storage device such as a DRAM or an SRAM. Secondary storage 208 includes, for example, a non-volatile storage device such as an HDD or an SSD.

Chipset 204 arbitrates the exchange of data between processor 202 and each component so as to allow the processing on entire security unit 200 to be performed.

Secondary storage 208 stores identification data ID and shared information 30 in addition to a system program 2082 for implementing a basic function of security unit 200.

System program 2084 includes a security program 230. Security program 230 is a program for managing whether the execution of control program 140 by control device 10 is permitted. That is, security program 230 provides a function as a security engine that manages whether the execution of control program 140 is permitted.

Shared information 30 is information used for managing unique information indicating the configuration of each of the plurality of devices making up each control device 10 included in control system 1. Shared information 30 is managed and shared among control devices 10 making up control system 1 based on a known distributed ledger technology. Shared information 30 is distributed ledger-based information and is thus tamper-resistant. Shared information 30 is used as a reference in determining whether to permit the execution of control program 140. Shared information 30 and the unique information indicating the configuration of each of the plurality of devices making up control device 10 will be described later.

Communication controller 210 is responsible for the exchange of data with control unit 100. As communication controller 210, as with communication controller 110 of control unit 100, a communication chip compliant with PCI Express, Ethernet (registered trademark), or the like can be used, for example.

USB controller 212 is responsible for the exchange of data with any information processor over a USB connection. Such an information processor includes, for example, a support device that provides the user with a function such as setting of security program 230.

Memory card interface 214 is configured to receive, in a detachable manner, memory card 215, which is an example of a storage medium. Memory card interface 214 allows data such as programs or various settings to be written to memory card 215 or allows data such as programs or various settings to be read from memory card 215.

Information system network controller 220 controls the exchange of data with other control devices 10 over information system network 2. Information system network controller 220 may employ a general-purpose network protocol such as Ethernet (registered trademark).

Fig. 4 illustrates a configuration example where processor 202 executes a program to provide necessary functions, but some or all of the functions thus provided may be implemented by a dedicated hardware circuit (for example, ASIC or FPGA). Alternatively, a core part of security unit 200 may be implemented by hardware having a general-purpose architecture (for example, an industrial personal computer based on a general-purpose personal computer). In such a configuration, a plurality of operating systems having different uses may be executed in parallel using a virtualization technology, and a necessary application may be executed on each OS.

Referring to Figs. 3 and 4, control device 10 may be connected to information system network 2 via information system network controller 120 of control unit 100, or alternatively may be connected to information system network 2 via information system network controller 220 of security unit 200. For the present embodiment, a description will be given on the assumption that control device 10 is connected via information system network controller 220 of security unit 200.

### <C. Outline of method for determining whether execution of control program is permitted>

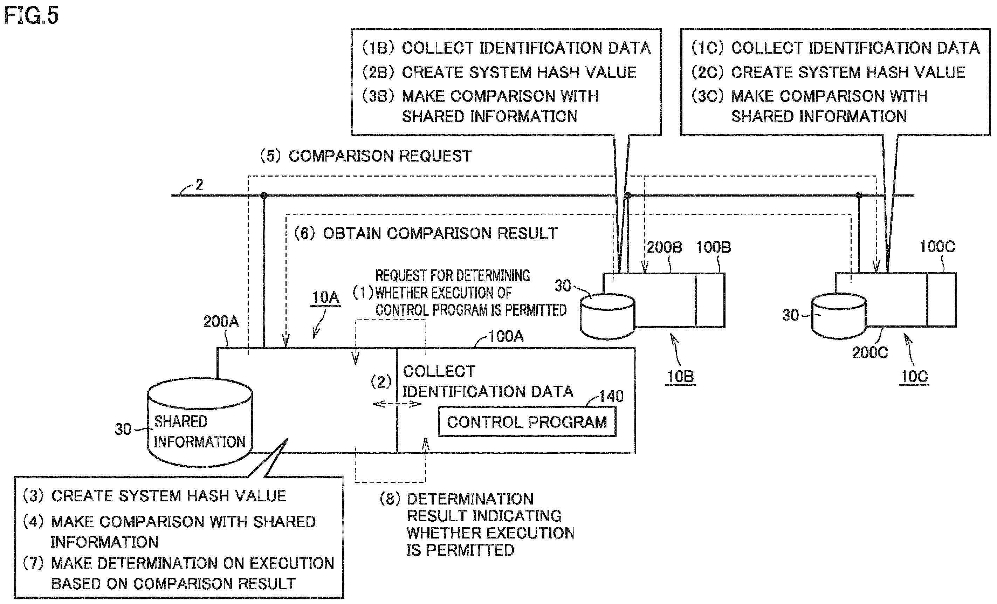

An outline of a method for determining whether the execution of control program 140 is permitted will be described with reference to Fig. 5. Fig. 5 is a diagram illustrating a flow of the method for determining whether the execution of control program 140 is permitted. Note that, in the example illustrated in Fig. 5, for the sake of simplicity, no illustration will be given of units (I/O unit 300, communication coupler 400, and the like) other than control unit 100 and security unit 200 making up each control device 10.

The example illustrated in Fig. 5 shows a state where, for example, control unit 100A has attempted to start control program 140. In this case, control unit 100A first issues, to security unit 200A, a request for determining whether the execution of control program 140 is permitted ((1) in the drawing).

In response to the determination request from control unit 100A, whether the unique information on each control device 10 in control system 1 managed by shared information 30 coincides with the unique information created based on current control device 10 is determined.

Specifically, security unit 200A collects identification data ID ((2) in the drawing), and creates a system hash value as unique information based on identification data ID thus collected ((3) in the drawing). The system hash value is obtained from a known hash function called with, as an argument, identification data ID of the devices other than security unit 200 making up control device 10.

The unique information is information defined based on the devices making up control device 10 and may be any information as long as a change to the configuration of control device 10 can be identified based on the unique information, so that the unique information is not limited to such a system hash value obtained based on identification data ID. For example, the unique information may be information indicating a network topology defining a connection relationship of the devices in control device 10.

Security unit 200A compares the unique information (system hash value) obtained based on identification data ID with shared information 30 ((4) in the drawing). Specifically, security unit 200A compares the unique information on control device 10A created based on identification data ID collected in (2) with the unique information on control device 10A managed by shared information 30 to determine whether the pieces of unique information coincide with each other.

In (4) in the drawing, the newly created unique information is compared with the unique information managed by shared information 30, and when the newly created unique information and the unique information coincide with each other, control device 10A is guaranteed to be control device 10 that is normally managed. On the other hand, when the newly created unique information and the unique information do not coincide with each other, there is a possibility that control device 10A is a control device that is not under management based on shared information 30.

Subsequently, security unit 200A issues a comparison request to each of control devices 10B, 10C included in control system 1 ((5) in the drawing). Specifically, security unit 200A creates unique information (system hash value) based on current control device 10 and issues a request for comparing the unique information (system hash value) thus created with the unique information managed by shared information 30 to determine whether the created unique information and the unique information coincide with each other.

In response to the comparison request, security unit 200B of control device 10B collects identification data ID ((1B) in the drawing) and creates the system hash value based on identification data ID thus collected ((2B) in the drawing). Subsequently, security unit 200B of control device 10B compares the system hash value of control device 10B thus created with shared information 30 ((3B) in the drawing). Likewise, security unit 200C of control device 10 performs the processes (1C) to (3C) in the drawing.

Security unit 200A receives a comparison result from each of control devices 10B, 10C ((6) in the drawing).

Security unit 200A determines whether the execution of the control program requested in (1) is permitted based on the comparison result from control device 10A obtained in the process (4) and the comparison results from control devices 10B, 10C obtained in the processes (5), (6) ((7) in the drawing). Security unit 200A permits the execution of the control program when the comparison results satisfy a prescribed condition. The prescribed condition may be freely designed, and examples of the prescribed condition include a condition of the comparison results obtained from control devices 10A to 10C coinciding with each other, a condition of a predetermined number of the comparison results coinciding with each other, and the like.

Security unit 200A notifies control unit 100A of a determination result indicating whether the execution of the control program is permitted ((8) in the drawing).

### <D. Functional configuration>

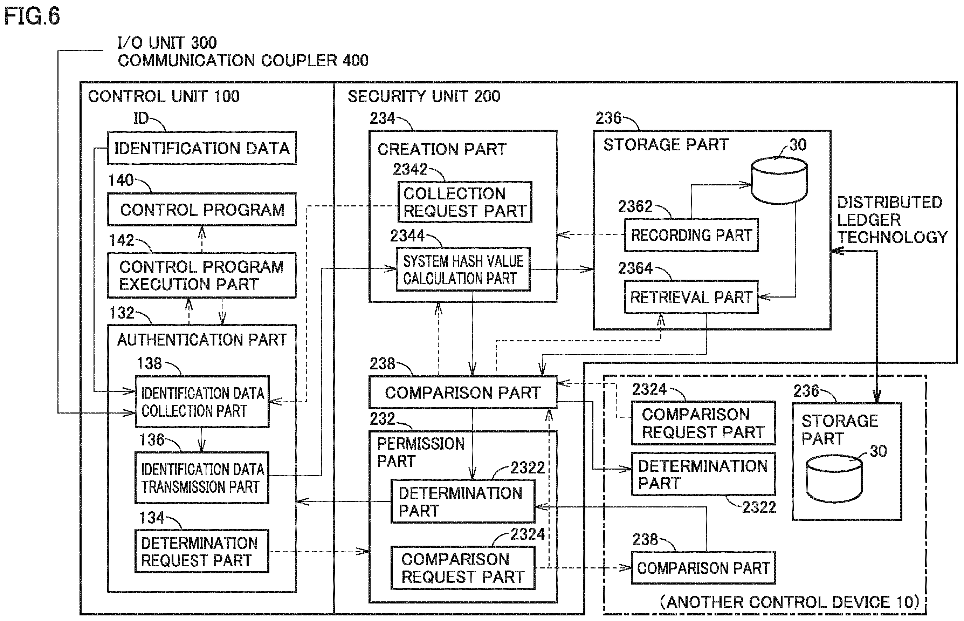

Fig. 6 is a block diagram illustrating examples of functional configurations of control unit 100 and security unit 200. In Fig. 6, a dashed arrow indicates a command flow. A solid arrow indicates an information flow.

Referring to Fig. 6, control unit 100 includes a control program execution part 142 and an authentication part 132. Such functions are implemented by system program 1082 executed by processor 102 of control unit 100.

Control program execution part 142 is responsible for executing control program 140. Upon receipt of the request for starting the execution of control program 140, control program execution part 142 requests authentication part 132 to authenticate control program 140. The "authenticate" is to authenticate whether the runtime environment of control program 140 is an environment managed by shared information 30 stored in each control device 10 of control system 1, that is, to authenticate whether the runtime environment is an environment where the execution of control program 140 is permitted.

Authentication part 132 includes a determination request part 134, an identification data transmission part 136, and an identification data collection part 138. Upon receipt of the authentication request from control program execution part 142, determination request part 134 requests a permission part 232 of security unit 200 to determine whether the execution of control program 140 is permitted.

Identification data transmission part 136 transmits, to security unit 200, identification data ID of each device making up control device 10 collected by identification data collection part 138.

Identification data collection part 138 collects, upon receipt of a request from a creation part 234 of security unit 200, identification data ID of each device making up control device 10. Identification data collection part 138 is requested to collect identification data ID from security unit 200 not only when the determination is made as to whether the execution of control program 140 is permitted but also when new unique information (system hash value) is recorded in shared information 30. Note that, according to the present embodiment, identification data collection part 138 collects identification data ID from each of the devices other than security unit 200 making up control device 10. Note that identification data ID of security unit 200 may be included in identification data ID for use in the creation of the system hash value that is the unique information.

Authentication part 132 receives, after being requested, by control program execution part 142, to authenticate control program 140, the determination result indicating whether the execution of control program 140 is permitted from permission part 232 of security unit 200. Authentication part 132 performs processing in accordance with the determination result received from security unit 200. Upon receipt of a determination result indicating that the execution is permitted, authentication part 132 makes a notification to control program execution part 142 to cause control program execution part 142 to start the execution of control program 140. On the other hand, upon receipt of a determination result indicating that the execution is not permitted, authentication part 132 prohibits control program execution part 142 from executing control program 140.

Security unit 200 includes permission part 232, creation part 234, a storage part 236, and a comparison part 238. Such functions are implemented by security program 230 executed by processor 202 of security unit 200.

Permission part 232 includes a determination part 2322 and a comparison request part 2324. Determination part 2322 determines whether the execution of control program 140 is permitted based on comparison results obtained from comparison part 238 of security unit 200 including determination part 2322 and from comparison part 238 of another security unit 200 and notifies authentication part 132 of control unit 100 of the determination result.

Comparison request part 2324 requests comparison part 238 to compare the unique information. Comparison request part 2324 requests not only comparison part 238 of security unit 200 including comparison request part 2324 but also comparison part 238 of another control device 10 to compare the unique information. Note that comparison request part 2324 only needs to request at least two comparison parts 238 to compare the unique information and need not request comparison parts 238 of all control devices 10 included in control system 1. Further, at least two comparison parts 238 requested to compare the unique information need not necessarily include comparison part 238 including comparison request part 2324.

Creation part 234 creates a system hash value that is unique information. Creation part 234 includes a collection request part 2342 and a system hash value calculation part 2344.

Collection request part 2342 is activated in response to a request for creating the system hash value issued by comparison part 238 or storage part 236. Upon the start of the comparison, comparison part 238 issues the request for create the system hash value. Storage part 236 issues the request for creating the system hash value when a change is made to the devices making up control device 10, for example, when a regular change is made to control device 10, and unique information on control device 10 after the change is newly recorded in shared information 30. Collection request part 2342 requests identification data collection part 138 of control unit 100 to collect identification data ID.

System hash value calculation part 2344 creates the system hash value based on identification data ID of each device transmitted from identification data transmission part 136. System hash value calculation part 2344 typically creates the system hash value in accordance with an algorithm applied to a known hash function. When being requested to create the system hash value by comparison part 238, system hash value calculation part 2344 transmits the system hash value thus created to comparison part 238. Further, when being requested to create the system hash value by storage part 236, system hash value calculation part 2344 transmits the created system hash value to storage part 236.

Storage part 236 stores, in the form of a distributed ledger, shared information 30 containing at least the unique information (system hash value) created by creation part 234 of each control device 10 included in control system 1 so as to share shared information 30 with other control devices 10. Storage part 236 includes a recording part 2362 and a retrieval part 2364.

Recording part 2362 is activated when a change is made to the devices making up any control device 10 among the plurality of control devices 10 included in control system 1, unique information on control device 10 after the change is newly recorded in shared information 30, and the management of the unique information is started. Recording part 2362 starts to manage the new unique information in accordance with a known distributed ledger technology.

Further, when a change is made to the devices making up control device 10 including security unit 200 including recording part 2362, and the management of the unique information on control device 10 after the change is started, recording part 2362 requests creation part 234 to create the unique information. The unique information created by creation part 234 in response to the request from recording part 2362 is managed as shared information 30 using the distributed ledger technology so as to share shared information 30 with storage part 236 of each control device 10.

Retrieval part 2364 retrieves, based on the request from comparison part 238, the unique information on control device 10 to be compared from shared information 30, and transmits the unique information contained in shared information 30 to comparison part 238.

Upon receipt of the request from comparison request part 2324, comparison part 238 requests creation part 234 to create the unique information. Further, upon receipt of the request from comparison request part 2324, comparison part 238 requests retrieval part 2364 to transmit the unique information contained in shared information 30. Comparison part 238 compares the unique information transmitted from system hash value calculation part 2344 with the unique information contained in shared information 30 and transmitted from retrieval part 2364, and transmits the comparison result to determination part 2322.

Specifically, comparison part 238 compares the unique information created in advance and recorded in shared information 30 with the unique information created in response to the comparison request. Note that, according to the present embodiment, the unique information created in response to the comparison request is compared with shared information 30 stored in storage part 236 of own control device 10, but the unique information may be compared with shared information 30 stored in another control device 10. Further, comparison part 238 may use at least two pieces of shared information 30 to compare the unique information created in response to the comparison request with each piece of shared information 30.

### <E. Shared information>

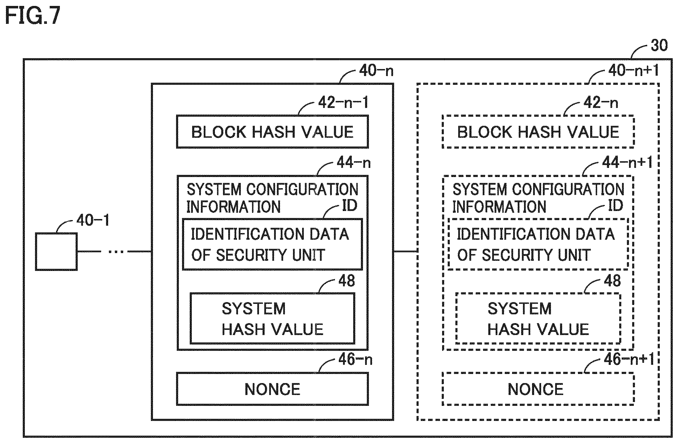

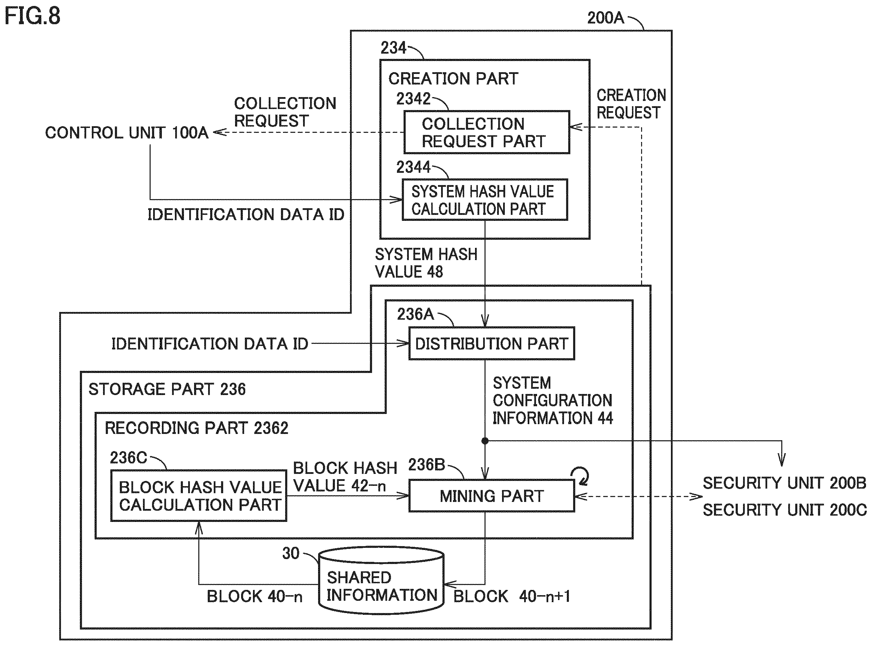

Shared information 30 will be described with reference to Figs. 7 and 8. Fig. 7 is a diagram illustrating shared information 30. Fig. 8 is a diagram illustrating a functional configuration of security unit 200 that is activated when a new block 40 is created.

Referring to Fig. 7, shared information 30 is made up of a series of blocks 40. Each block 40 contains at least a system hash value 48 obtained based on the configuration of control device 10 at a certain timing. Block 40 is created when a change is made to the devices making up control device 10 or when new control device 10 is connected to control system 1. The information in each block 40 is not updated, and new block 40 is created based on latest block 40.

Specifically, each block 40 contains a block hash value 42, system configuration information 44, and a nonce 46. System configuration information 44 contains identification data ID of security unit 200 and system hash value 48 of control device 10 including security unit 200.

Block hash value 42 is unique information indicating information on the previous block. Block hash value 42 is, for example, a return value of a known hash function called with the information on the previous block as an argument.

In the example illustrated in Fig. 7, it is assumed that, with blocks 40-1 to 40-n contained in shared information 30 in that order, a change is made to the device configuration of control device 10, and a new block 40-n+1 is added to shared information 30. Block 40-n+1 contains a block hash value 42-n. Block hash value 42-n is a return value of a known hash function called with the information on block 40-n as an argument.

Nonce 46 is a number that is created when block 40 is newly created and is created each time block 40 is created. Nonce 46 is a number unique to each block 40.

Referring to Fig. 8, a function of security unit 200 that is activated when new block 40 is created will be described. Note that the functions described with reference to Fig. 6 will not be described again. Further, Fig. 8 illustrates an example where blocks up to block 40-n are stored in shared information 30, and block 40-n+1 is newly stored in response to a change made to the devices making up control device 10A.

As described above, upon receipt of the request for creating system hash value 48 from storage part 236, collection request part 2342 of creation part 234 requests control unit 100A to collect identification data ID. System hash value calculation part 2344 creates system hash value 48 based on identification data ID of each device making up control device 10A transmitted from control unit 100A.

Recording part 2362 of storage part 236 includes a distribution part 236A, a mining part 236B, and a block hash value calculation part 236C. System hash value calculation part 2344 transmits system hash value 48 thus created to distribution part 236A.

Distribution part 236A creates system configuration information 44 based on system hash value 48 and identification data ID of security unit 200A and distributes system configuration information 44 to mining part 236B of each of security units 200A, 200B, 200C.

Mining part 236B creates block 40-n+1 in cooperation with mining parts 236B of other security units 200B, 200C.

Block hash value calculation part 236C creates block hash value 42 based on block 40 last recorded in shared information 30. In the example illustrated in Fig. 8, last recorded block 40 is block 40-n, so that block hash value 42-n is created based on block 40-n.

Mining part 236B sets nonce 46 based on system configuration information 44 and block hash value 42-n and creates block 40 so that information obtained based on block 40 satisfies a prescribed condition. Note that the process of setting nonce 46 and creating block 40 satisfying the prescribed condition as described above is referred to as mining. Mining part 236B of each security unit 200 performs mining, and block 40 created by mining part 236B that is the first mining part to find nonce 46 that satisfies the prescribed condition is stored in shared information 30.

That is, the entity that has created system configuration information 44 and the entity that has created block 40 may be different from each other.

Block 40 is stored in shared information 30 of each security unit 200. That is, shared information 30 of each security unit 200 remains uniform unless shared information 30 is tampered with.

Each block 40 contained in shared information 30 contains block hash value 42 obtained based on previous block 40, as described with reference to Figs. 7 and 8. That is, when one block 40 is tampered with, other blocks 40 also need to be tampered with one after another, so that tampering with shared information 30 requires great efforts. That is, it can be said that shared information 30 is tamper-resistant.

According to the present embodiment, system hash value 48 contained in shared information 30 that is tamper-resistant as described above is set as a comparison target.

Note that it is only required that shared information 30 be stored in the form of a distributed ledger so as to be shared among the plurality of control devices 10, so that the method for creating one block 40 is not limited to the method described with reference to Figs. 7 and 8. The method for creating one block 40 may be freely designed for each control system 1.

For example, the method for creating block 40 may be selected according to a security level applied when new control device 10 is added to control system 1. For example, when the security level applied when new control device 10 is added to control system 1 is high, a security level (transparency and stringency) applied to the process of creating block 40 can be lowered. On the other hand, in order to make the degree of freedom to add new control device 10 to control system 1 higher, it is necessary to raise the security level (transparency and stringency) applied to the process of creating block 40.

Specifically, when shared information 30 is stored in the form of a distributed ledger using a private or consortium-type blockchain technology, it is possible to lower the degree of difficulty of consensus building and shorten the time required for consensus building, that is, the time required to create one block 40 and store one block 40 in shared information 30. On the other hand, when shared information 30 is stored in the form of a distributed ledger using a public blockchain technology, the degree of freedom to add new control device 10 to control system 1 is high, so that it is necessary to raise the degree of difficulty of consensus building.

### <F. Sequence diagram>

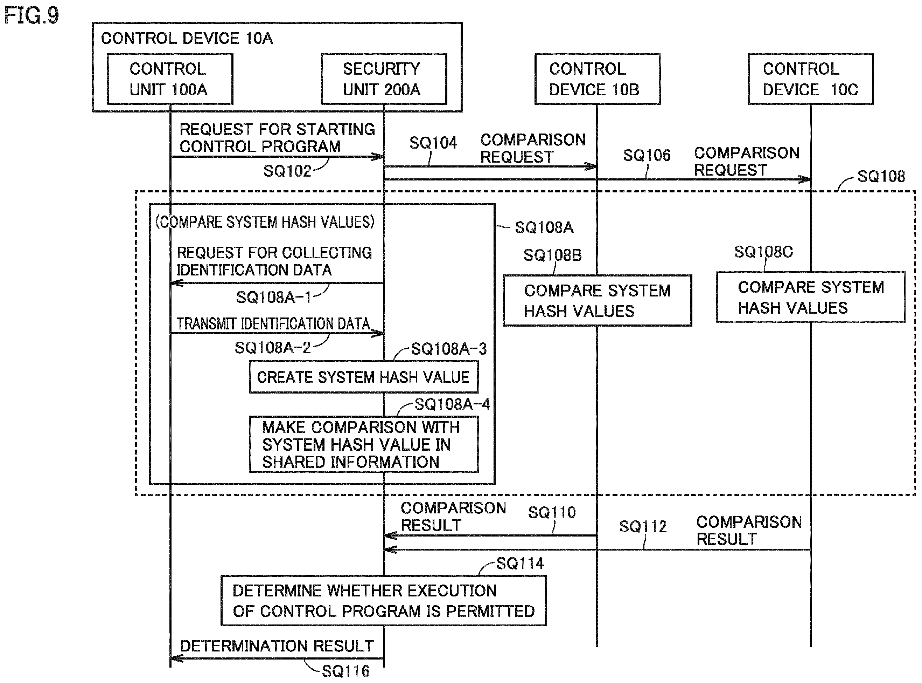

Fig. 9 is a sequence diagram illustrating a processing sequence performed upon receipt of the request for starting the execution of the control program. Hereinafter, the sequence is simply denoted as "SQ". Note that, in Fig. 9, a description will be given on the assumption that control unit 100A issues a request for starting the execution of control program 140.

In SQ102, control unit 100A issues, to security unit 200A, the request for starting the control program.

In SQ104, security unit 200A issues a comparison request to control device 10B. Comparison means a comparison between system hash value 48 created based on the configuration of current control device 10 and system hash value 48 prestored in shared information 30 and is also referred to as "comparison of system hash values".

In SQ106, security unit 200A issues the comparison request to control device 10C.

Control devices 10A, 10B, 10C making up control system 1 each compare the system hash values (SQ108). Specifically, in SQ108A, control device 10A compares the system hash values. In SQ108B, control device 10B compares the system hash values. In SQ108C, control device 10C compares the system hash values.

How to compare the system hash values will be described with reference to control device 10A as an example. In SQ108A-1, security unit 200A requests control unit 100A to collect identification data ID.

In SQ108A-2, control unit 100A transmits identification data ID of each device making up control device 10A to security unit 200A.

In SQ108A-3, security unit 200A creates system hash value 48 based on identification data ID of each device making up control device 10A.

In SQ108A-4, security unit 200A makes a comparison with system hash value 48 in shared information 30. Specifically, security unit 200A searches for block 40 containing identification data ID of security unit 200A in order from the latest block in shared information 30 and retrieves system hash value 48 from block 40 containing identification data ID of security unit 200A. Security unit 200A obtains a comparison result by comparing system hash value 48 created in SQ108A-3 with system hash value 48 retrieved from shared information 30.

Note that, in Fig. 9, both the comparison of the system hash values made by control device 10B (SQ108B) and the comparison of the system hash values made by control device 10C (SQ108C) are the same as the comparison of the system hash values made by control device 10A (SQ108A), and thus no illustration will be given of the comparisons.

Specifically, security unit 200B of control device 10B requests control unit 100B to collect identification data ID. Control unit 100B transmits identification data ID of each device making up control device 10B to security unit 200B. Security unit 200B creates system hash value 48 based on identification data ID of each device making up control device 10B. Specifically, security unit 200B searches for block 40 containing identification data ID of security unit 200B in order from the latest block in shared information 30 and retrieves system hash value 48 from block 40 containing identification data ID of security unit 200B. Security unit 200B obtains a comparison result by comparing system hash value 48 created in response to the comparison request triggered by the request for starting the control program with system hash value 48 retrieved from shared information 30.

Likewise, control device 10C collects identification data ID of each device making up control device 10C in response to the comparison request triggered by the request for starting the control program and creates system hash value 48 based on identification data ID thus collected. Security unit 200C of control device 10C retrieves, from shared information 30, system hash value 48 in block 40 containing identification data ID of security unit 200C. Security unit 200C obtains a comparison result by comparing system hash value 48 created in response to the comparison request triggered by the request for starting the control program with system hash value 48 retrieved from shared information 30.

In SQ110, control device 10B transmits the comparison result to security unit 200A.

In SQ112, control device 10C transmits the comparison result to security unit 200A.

In SQ114, security unit 200A determines whether the execution of the control program is permitted. Specifically, security unit 200A permits, based on the comparison result obtained by SQ108A, the comparison result obtained by SQ110, and the comparison result obtained by SQ112, the execution of the control program when the comparison results satisfy a prescribed condition. On the other hand, security unit 200A does not permit the execution of the control program when the comparison results do not satisfy the prescribed condition.

The prescribed condition is not limited to a condition of all the comparison results coinciding with each other, and may include a condition of at least some of the comparison results coinciding with each other.

In SQ116, security unit 200A notifies control unit 100A of the determination result.

### <G. Example where execution of control program is permitted>

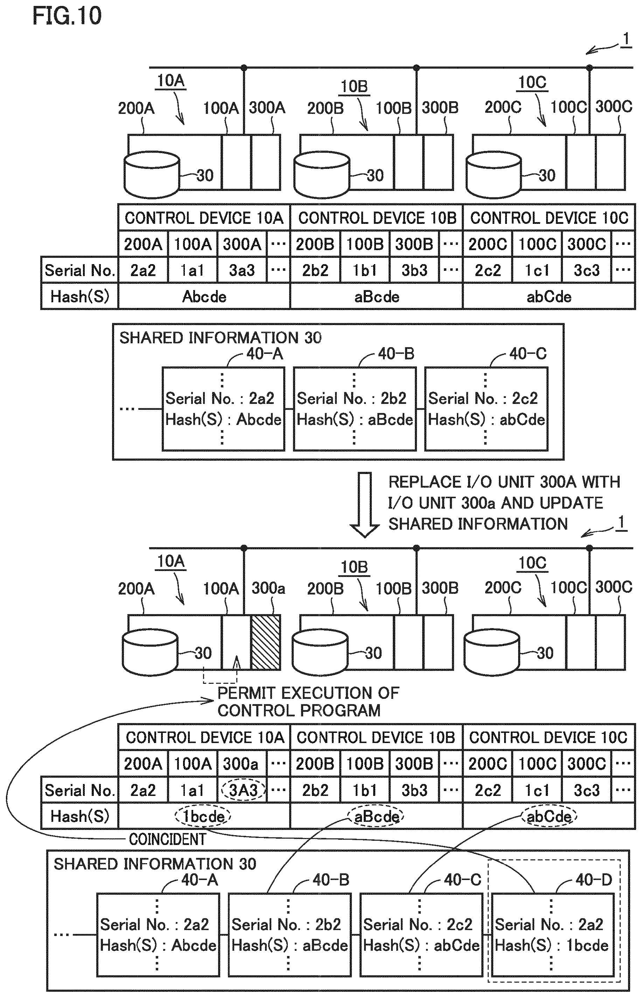

A case where the execution of the control program is permitted will be described with reference to Fig. 10. Fig. 10 is a diagram illustrating an example where the execution of the control program is permitted. "Serial No." in Fig. 10 denotes identification data ID. "Hash (S)" denotes system hash value 48.

In Fig. 10, it is assumed that I/O unit 300A of control device 10A is replaced with an I/O unit 300a, and shared information 30 is normally updated. First, control system 1 before the update will be described.

System hash value 48 (Hash (S)) obtained based on the identification data (Serial No.) of each device (control unit 100A, I/O unit 300A, ...) other than security unit 200A making up control device 10A is "Abcde". System hash value 48 "Abcde" and identification data ID "2a2" of security unit 200A are recorded in a block 40-A.

Likewise, for control device 10B, system hash value 48 "aBcde" and identification data ID "2b2" of security unit 200B are recorded in a block 40-B. For control device 10C, system hash value 48 "abCde" and identification data ID "2c2" of security unit 200C are recorded in a block 40-C.

In this case, when I/O unit 300A of control device 10A is replaced with I/O unit 300a, and shared information 30 is normally updated, a block 40-D is newly recorded in shared information 30.

Specifically, the identification data of I/O unit 300A is "3a3", whereas the identification data of I/O unit 300a is "3A3". Therefore, system hash value 48 calculated based on the identification data of control device 10A becomes "1bcde" different from "Abcde". Creation parts 234 of security units 200A to 200C create, in cooperation with each other, block 40-D containing system hash value 48 "1bcde" and identification data ID "2a2" of security unit 200A and record block 40-D in shared information 30. At this time, instead of rewriting the information of block 40-A, block 40-D is newly added to shared information 30.

As illustrated in Fig. 10, when shared information 30 is normally updated in response to a change to the configuration of control system 1, system hash values 48 obtained based on control devices 10A to 10C and system hash value 48 of control devices 10A to 10C recorded in shared information 30 coincide with each other. Therefore, as illustrated in Fig. 10, when shared information 30 is normally updated in response to a change to the configuration of control system 1, the execution of the control program is permitted.

### <H. Example where execution of control program is not permitted>

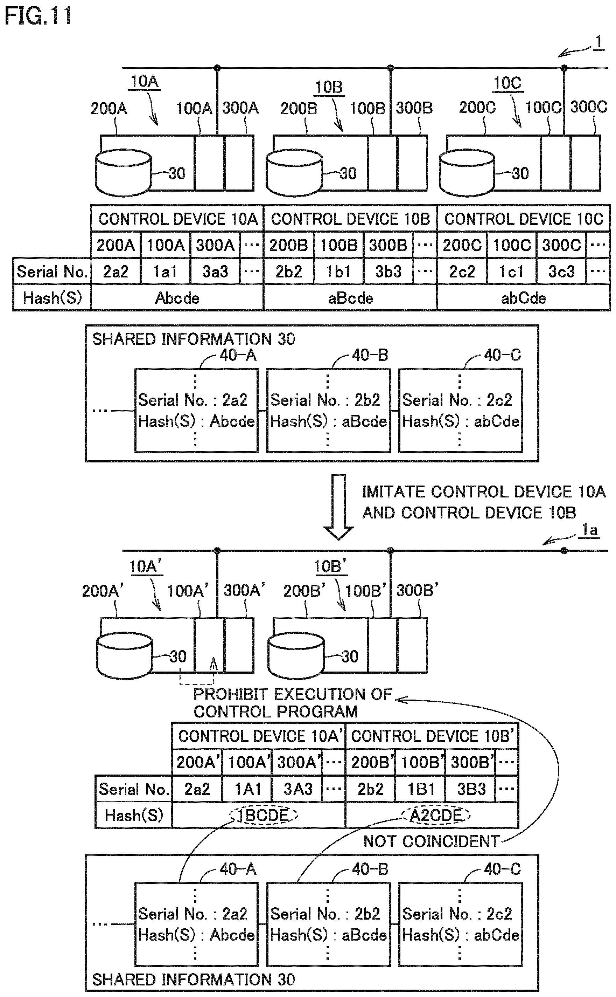

A case where the execution of the control program is not permitted will be described with reference to Fig. 11. Fig. 11 is a diagram illustrating an example where the execution of the control program is not permitted.

In Fig. 11, it is assumed that a control system 1a made up of a control device 10A' that imitates control device 10A and a control device 10B' that imitates control device 10B is newly created.

In order to imitate control device 10A, both hardware and software of control device 10A are copied for the execution of the control program. Likewise, in order to imitate control device 10B, both hardware and software of control device 10B are copied for the execution of the control program.

When the software is copied, both authentication program 130 and security program 230 are also copied. Copying the software further causes stored shared information 30 to be copied in response to the execution of security program 230.

This causes both control device 10A' and control device 10B' to store shared information 30. As described above, shared information 30 is tamper-resistant. Therefore, in shared information 30, blocks 40-A, 40-B, 40-C are stored as the latest unique information on control devices 10A, 10B, 10C.

It is assumed that control device 10A' is made up of devices common to control device 10A. Likewise, it is assumed that control device 10B' is made up of devices common to control device 10B.

Identification data ID of a security unit 200A' of control device 10A' is tampered with to be the same as identification data ID of security unit 200A. Further, identification data ID of a security unit 200B' of control device 10B' is tampered with to be the same as identification data ID of security unit 200B.

It is assumed that identification data ID of devices (control units 100A', 100B', I/O units 300A', 300B', and the like) other than security unit 200 is not tampered with.

In this case, when control unit 100A' issues the request for starting the execution of the control program, security unit 200A' performs the comparation processing on system hash values 48 illustrated in Fig. 9. Specifically, security unit 200A' creates system hash value 48 of control device 10A', and compares system hash value 48 thus created with system hash value 48 created based on the identification data "2a2" of security unit 200 and stored in shared information 30.

In the example illustrated in Fig. 11, identification data ID of each device other than security unit 200A' is not tampered with and is thus different from identification data ID of a corresponding device included in control device 10A. As a result, system hash value 48 of control device 10A' becomes "1BCDE" and is thus different from system hash value 48 "Abcde" created in advance based on the identification data "2a2" of security unit 200 and stored in shared information 30.

Further, security unit 200A' requests security unit 200B' to compare the system hash values. Security unit 200B' creates system hash value 48 of control device 10B', and compares system hash value 48 thus created with system hash value 48 created based on the identification data "2b2" of security unit 200 and stored in shared information 30.

In the example illustrated in Fig. 11, identification data ID of each device other than security unit 200B' is not tampered with and is thus different from identification data ID of a corresponding device included in control device 10B. As a result, system hash value 48 of control device 10B' becomes "A2CDE" and is thus different from system hash value 48 "aBcde" created in advance based on the identification data "2b2" of security unit 200 and stored in shared information 30.

Security unit 200A' prohibits the execution of the control program for both control device 10A' and control device 10B' due to the result that there is no coincidence.

Further, security unit 200A' may regard, as the result that there is no coincidence, no reception of the result of the comparison request to control device 10C in shared information 30.

The control program for implementing the environment managed by control device 10A may be developed by a company different from a company using control device 10A. In such a case, when the control program and the environment where the control program can be used are easily imitated, the intellectual property belonging to the company that develops the control program cannot be fully protected.

According to the present embodiment, it is necessary not only to copy the identification data of each device making up control device 10A but also to imitate entire control system 1 including control device 10A. Further, in order to imitate entire control system 1, it is necessary to tamper with the identification data of the devices making up each control device 10.

Control device 10 may be made up of several tens of devices, and in such a case, it is necessary to tamper with the identification data of the several tens of devices. It is further necessary to perform this work on each control device included in the control system. This requires much effort to imitate one control device managed by the control program.

That is, control system 1 according to the present embodiment can prevent the environment where the control program can be used from being easily imitated, so that the intellectual property, which is the control program, can be protected.

### <I. Modification>

### (i1. Modification of processing sequence performed upon receipt of request for starting execution of control program)

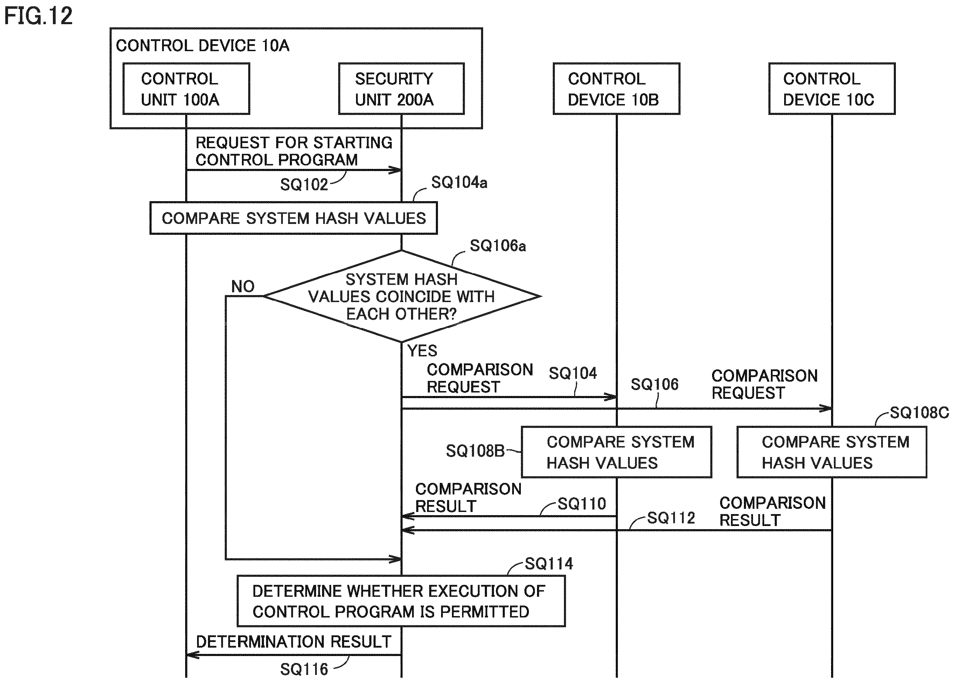

Fig. 12 is a sequence diagram illustrating a modification of the processing sequence performed upon receipt of the request for starting the execution of the control program. Note that, in Fig. 12, an SQ number the same as in Fig. 9 denotes common processing.

According to the above-described embodiment, in response to the request for starting the control program, the comparison request is issued to each control device 10. Note that a configuration may be employed where a comparison is made for the own control device first, and then the comparison request is issued to other control devices 10 on condition that the comparison results in coincidence.

Specifically, upon receipt of the request for starting the control program (SQ102), security unit 200A compares the system hash values of control device 10A (SQ104a), and when system hash values 48 coincide with each other (YES in SQ106a), security unit 200A issues the comparison request to each of control devices 10B, 10C. Note that the details of SQ104a are the same as of SQ108A (SQ108-1 to SQ108A-4) illustrated in Fig. 9.

In SQ106a, when system hash values 48 do not coincide with each other (NO in SQ106a), security unit 200A determines whether the execution of the control program is permitted without issuing the comparison request to each of control devices 10B, 10C (SQ114). In this case, since system hash values 48 do not coincide with each other, it is determined not to permit the execution of the control program.

As described above, the comparison for own control device 10 is made first, and then the comparison request is issued to other control devices 10 on condition that the comparison results in coincidence, which eliminates the need for issuing the comparison request to other control devices 10 more than necessary and thus makes the processing of control system 1 simple as a whole.

Note that a configuration may be employed where some control devices 10 in control system 1 are designated as administrators, and a determination is made as to whether the execution of the control program is permitted based on comparison results from the administrators. When the number of control devices 10 making up control system 1 increases, the comparison may become a time-consuming work, so that the determination as to whether the execution of the control program is permitted based on the comparison results from some administrators allows a reduction in time required for the comparison. Note that control device 10 that executes the control program on which the determination as to whether execution is permitted is made need not necessarily be designated as an administrator. Further, only at least two control devices need to be designated as administrators.

### (i2. First modification of method for comparing system hash values)

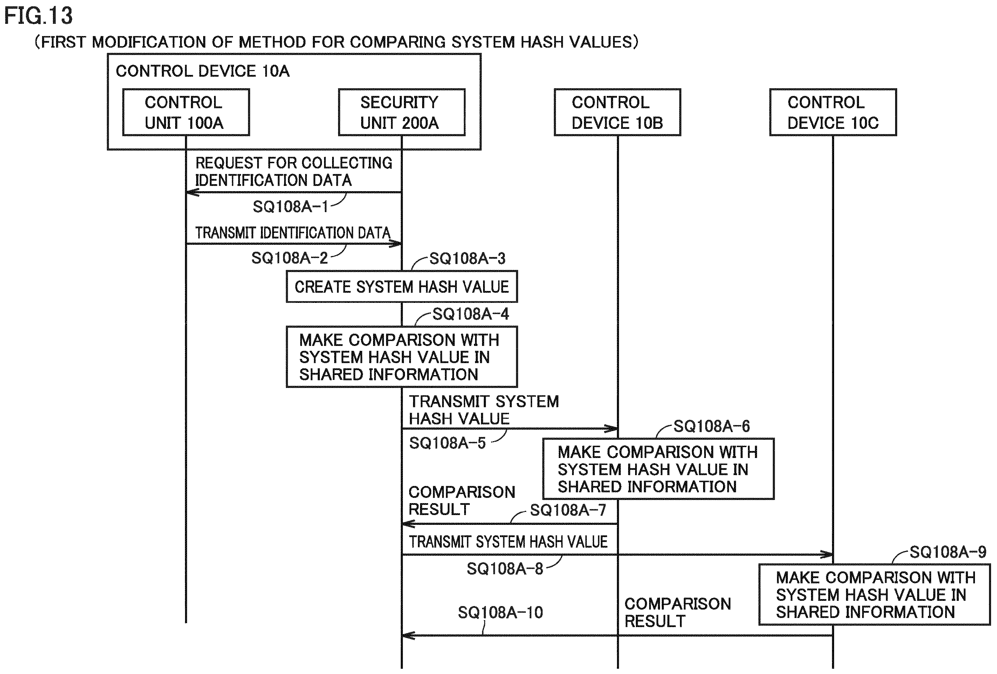

Fig. 13 is a diagram illustrating a processing sequence according to a first modification of the method for comparing system hash values. Note that the processing sequence illustrated in Fig. 13 is a modification of SQ108A illustrated in Fig. 9. Note that, in Fig. 13, an SQ number the same as in Fig. 9 denotes common processing. Only processing different from Fig. 9 will be described below. That is, SQ108-1 to SQ108A-4 are the same as in Fig. 9, and thus a description will be given of SQ108A-5 and subsequent processing.

In Fig. 9, system hash value 48 of own control device 10 is compared only with shared information 30 stored in own control device 10. Note that system hash value 48 of own control device 10 may be compared with shared information 30 stored in another control device 10.

Specifically, in SQ108A-5, security unit 200A transmits system hash value 48 created in SQ108A-3 to control device 10B.

In SQ108A-6, control device 10B makes a comparison with the system hash value in shared information 30. Specifically, security unit 200B of control device 10B searches for block 40 containing identification data ID of security unit 200A in order from the latest block in shared information 30 and retrieves system hash value 48 from block 40 containing identification data ID of security unit 200A. Security unit 200B obtains a comparison result by comparing system hash value 48 created by security unit 200A in SQ108A-3 and transmitted in SQ108A-5 with system hash value 48 retrieved from shared information 30 stored in control device 10B.

In SQ108A-7, control device 10B transmits the comparison result obtained in SQ108A-6 to security unit 200A.

In SQ108A-8, security unit 200A transmits system hash value 48 created in SQ108A-3 to control device 10C.

In SQ108A-9, control device 10C makes a comparison with the system hash value in shared information 30. Specifically, security unit 200C of control device 10C obtains a comparison result by comparing system hash value 48 created by security unit 200A in SQ108A-3 and transmitted in SQ108A-8 with system hash value 48 of control device 10A in shared information 30 stored in control device 10C.

In SQ108A-10, control device 10C transmits the comparison result obtained in SQ108A-9 to security unit 200A.

That is, in order to compare system hash values 48 of own control device 10, not only a comparison with system hash value 48 in shared information 30 stored in own control device 10 but also a comparison with system hash value 48 in shared information 30 stored in other control devices 10 may be made.

For example, it is assumed that control device 10A is illegally imitated, and control device 10A' is created accordingly, shared information 30 stored in control device 10A' is tampered with, and system hash value 48 of control device 10A' is recorded in shared information 30. In this case, when the security program of control device 10A' is compared not only with shared information 30 of own control device 10A' but also with shared information 30 of other control devices 10, it is required that, in order to permit the execution of the control program, shared information 30 of other control devices 10 be tampered with, thereby making the security level higher.

### (i3. Second modification of method for comparing system hash values)

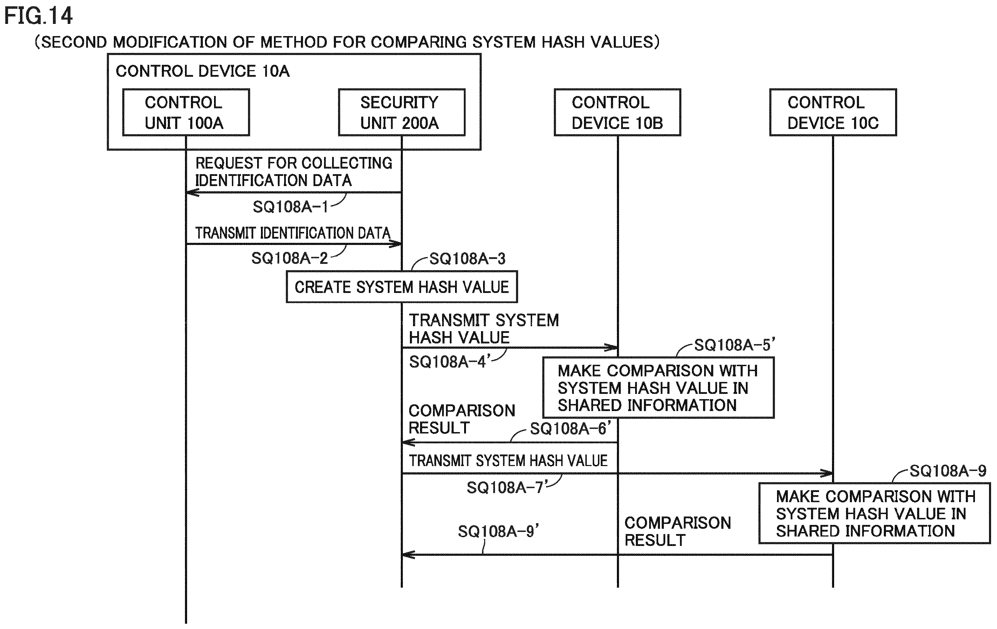

Fig. 14 is a diagram illustrating a processing sequence according to a second modification of the method for comparing system hash values. Note that the processing sequence illustrated in Fig. 14 is a modification of SQ108A illustrated in Fig. 9. Note that, in Fig. 14, an SQ number the same as in Fig. 9 denotes common processing. Only processing different from Fig. 9 will be described below. That is, SQ108-1 to SQ108A-3 are the same as in Fig. 9, and thus a description will be given of SQ108A-4' and subsequent processing.

Specifically, in SQ108A-4', security unit 200A transmits system hash value 48 created in SQ108A-3 to control device 10B.

In SQ108A-5', control device 10B makes a comparison with the system hash value in shared information 30. Specifically, security unit 200B of control device 10B searches for block 40 containing identification data ID of security unit 200A in order from the latest block in shared information 30 and retrieves system hash value 48 from block 40 containing identification data ID of security unit 200A. Security unit 200B obtains a comparison result by comparing system hash value 48 created by security unit 200A in SQ108A-3 and transmitted in SQ108A-4' with system hash value 48 retrieved from shared information 30 stored in control device 10B.

In SQ108A-6', control device 10B transmits the comparison result obtained in SQ108A-5' to security unit 200A.

In SQ108A-7', security unit 200A transmits system hash value 48 created in SQ108A-3 to control device 10C.

In SQ108A-8', control device 10C makes a comparison with the system hash value in shared information 30. Specifically, security unit 200C of control device 10C obtains a comparison result by comparing system hash value 48 created by security unit 200A in SQ108A-3 and transmitted in SQ108A-7' with system hash value 48 of control device 10A in shared information 30 stored in control device 10C.

In SQ108A-9', control device 10C transmits the comparison result obtained in SQ108A-8' to security unit 200A.

That is, the comparison result is not limited to a comparison result obtained by making a comparison with system hash value 48 in shared information 30 stored in own control device 10, and may be a comparison result obtained by making a comparison with system hash value 48 in shared information 30 stored in at least one of security units 200 in control system 1.

### (i4. Other modifications)

According to the above-described embodiment, processor 102 responsible for executing the control program and processor 202 responsible for executing the security program are separately provided in different devices. Note that a single device may include processor 202 responsible for executing the security program and processor 102 responsible for executing the control program.

An example according to the above-described embodiment where control system 1 is made up of only the plurality of control devices 10 has been described. Note that control system 1 may include not only the plurality of control devices 10 but also a central control device such as a database system, a manufacturing execution system (MES), or an analysis system that obtains information from each control device 10 and performs macroscopic or microscopic analysis. Further, an HMI may be connected to information system network 2.

### REFERENCE SIGNS LIST

1, 1X, 1a: control system, 2: information system network, 4: field network, 10, 10X: control device, 30, 30X: shared information, 40: block, 42: block hash value, 44: system configuration information, 46: nonce, 48: system hash value, 100: control unit, 102, 202: processor, 104, 204: chipset, 106, 206: primary storage, 108, 208: secondary storage, 110, 210: communication controller, 112, 212: USB controller, 114, 214: memory card interface, 115, 215: memory card, 116: field network controller, 118: internal bus controller, 120, 220: information system network controller, 130: authentication program, 132: authentication part, 134: determination request part, 136: identification data transmission part, 138: identification data collection part, 140, 140X: control program, 142: control program execution part, 142X: control engine, 200: security unit, 230: security program, 230X: security Engine, 232, 232X: permission part, 234, 234X: creation part, 236, 236X: storage part, 236A: distribution part, 236B: mining part, 236C: block hash value calculation part, 238, 238X: comparison part, 300: I/O unit, 400: communication coupler, 1082, 2082: system program, 2322: determination part, 2324: comparison request part, 2342: collection request part, 2344: system hash value calculation part, 2362: recording part, 2364: retrieval part, ID: identification data

## Claims

1. A control system (1X, 1) comprising a plurality of control devices (10X, 10) capable of communicating with each other, wherein
each of the control devices includes
a control engine (142X, 1082) configured to execute a control program for controlling a control target, and
a security engine (230X, 230) configured to manage whether the execution of the control program by the control engine is permitted, and
each of the security engines includes
a creation means (234X, 234) configured to create unique information indicating a configuration of the respective control device, wherein the unique information is information defined based on one or a plurality of devices making up the respective control device,
a storage means (236X, 236) configured to store shared information (30X, 30) containing at least first unique information (48) created in advance of a comparison request by the respective creation means for each of the control devices in a form of a distributed ledger allowing to share the shared information with the other control devices,
a comparison means (238X, 238) configured to compare second unique information (48) created by the respective creation means of the respective control device in response to the comparison request with the first unique information on the respective control device contained in at least one piece of the shared information stored in each of the security engines, and
a permission means (232X, 232) configured to issue, in response to a request for starting the execution of the control program, the comparison request to each of at least two comparison means and determine whether the execution of the control program is permitted based on a comparison result obtained from each of the at least two comparison means.

2. The control system according to claim 1, wherein
the storage means is configured to handle, as one transaction, information (44) containing the first unique information and an identifier that can identify a security engine that has created the first unique information with the first unique information and the identifier associated with each other.

3. The control system according to claim 1 or 2, wherein
the comparison means is configured to compare the second unique information created by the respective control device with the shared information stored in the security engine of the respective control device (SQ108A, SQ104a).

4. The control system according to claim 1 or 2, wherein
the comparison means is configured to compare the second unique information created by the respective control device with each piece of the shared information stored in each of at least two security engines and obtain a comparison result based on a result of the comparison with each piece of the shared information (SQ108A-4 to SQ108-10, SQ108A-4' to SQ108A-9').

5. The control system according to any one of claims 1 to 4, wherein
each of the control devices includes a plurality of devices (100, 200, 300, 400), and
the plurality of devices include a control unit (100) having the control engine and a security unit (200) having the security engine.

6. The control system according to claim 5, wherein
the security unit includes a system program (2082) configured to implement a basic function of the security unit, and
the system program comprises a program, that when executed by the control device, causes the control device to implement the security engine.

7. The control system according to any one of claims 1 to 6, wherein
when the comparison result obtained as a result of the comparison request issued to the comparison means of the respective control device in response to the request for starting the execution of the control program satisfies a prescribed condition, the permission means is configured to issue the comparison request to the comparison means of another one of the security engines (SQ104a, SQ106a).

8. A control device (10X, 10) capable of communicating with other control devices of the control system of claim 1, the control device comprising:
a control engine (142X, 1082) configured to execute a control program for controlling a control target; and
a security engine (230X, 230) configured to manage whether the execution of the control program by the control engine is permitted, wherein
the security engine includes
a creation means (234X, 234) configured to create unique information indicating a configuration of the respective control device, wherein the unique information is information defined based on one or a plurality of devices making up the respective control device,
a storage means (236X, 236) configured to store shared information (30X, 30) containing at least first unique information (48) created in advance of a comparison request by the respective creation means for each of the control devices in a form of a distributed ledger,
a comparison means (238X, 238) configured to compare second unique information (48) created by the respective creation means of the respective control device in response to the comparison request with the first unique information on the respective control device contained in at least one piece of the shared information stored in each of the security engines, and
a permission means (232X, 232) configured to issue, in response to a request for starting the execution of the control program, the comparison request to each of at least two comparison means and determine whether the execution of the control program is permitted based on a comparison result obtained from each of the at least two comparison means.

9. A management method performed by a control system (1X, 1) including a plurality of control devices capable of communicating with each other, the management method comprising:
creating, by each of the plurality of control devices, first unique information indicating a configuration of the respective control device, wherein the unique information is information defined based on one or a plurality of devices making up the respective control device (1);
storing shared information containing at least the first unique information created by each of the control devices in a form of a distributed ledger;
issuing, by a control device that has received a request for starting execution of a control program for controlling a control target, a comparison request to at least two control devices storing the shared information (2), (3);
creating, by each of the control devices that has received the comparison request, second unique information indicating the configuration of the respective control device, wherein the unique information is information defined based on one or a plurality of devices making up the respective control device (4), (5);
comparing, by each of the control devices that has received the comparison request, the second unique information created by the respective control device with the first unique information on the respective control device contained in at least one piece of the shared information stored in each of the control devices (6); and
permitting, when a comparison result obtained from each of the control devices that has received the comparison request satisfies a prescribed condition, the execution of the control program (7), (8).

## Patentansprüche

1. Steuersystem (1X, 1), umfassend eine Vielzahl von Steuervorrichtungen (10X, 10), die in der Lage sind, miteinander zu kommunizieren, wobei
jede aus den Steuervorrichtungen Folgendes umfasst:
eine Steuerengine (142X, 1082), die konfiguriert ist, um ein Steuerprogramm zum Steuern eines Steuerziels auszuführen, und
eine Sicherheitsengine (230X, 230), die konfiguriert ist, um zu verwalten, ob das Ausführen des Steuerprogramms durch die Steuerengine zulässig ist, und
wobei jede aus den Sicherheitsengines Folgendes umfasst:
ein Erzeugungsmittel (234X, 234), das konfiguriert ist, um eindeutige Informationen zu erzeugen, die eine Konfiguration der entsprechenden Steuervorrichtung angeben, wobei die eindeutigen Informationen Informationen sind, die beruhend darauf definiert sind, dass eine Vorrichtung oder eine Vielzahl von Vorrichtungen die entsprechende Steuervorrichtung bildet,
ein Speichermittel (236X, 236), das konfiguriert ist, um gemeinsam genutzte Informationen (30X, 30), welche zumindest erste eindeutige Informationen (48) enthalten, die vor einer Vergleichsanfrage durch das entsprechende Erzeugungsmittel für jede aus den Steuervorrichtungen erzeugt wurden, in Form eines verteilten Registers, das ein gemeinsames Nutzen der gemeinsam genutzten Informationen mit den anderen Steuervorrichtungen erlaubt, zu speichern,
ein Vergleichsmittel (238X, 238), das konfiguriert ist, um als Antwort auf die Vergleichsanfrage zweite eindeutige Informationen (48), die durch das entsprechende Erzeugungsmittel der entsprechenden Steuervorrichtung erzeugt wurden, mit den ersten eindeutigen Informationen über die entsprechende Steuervorrichtung, die in zumindest einem in jeder der Sicherheitsengines gespeicherten Element der gemeinsam genutzten Informationen enthalten sind, zu vergleichen, und
ein Erlaubnismittel (232X, 232), das konfiguriert ist, um als Antwort auf eine Anfrage bezüglich des Startens des Ausführens des Steuerprogramms die Vergleichsanfrage an jede aus zumindest zwei Vergleichsmitteln auszugeben und beruhend auf einem von jedem aus den zumindest zwei Vergleichsmitteln erhaltenen Vergleichsergebnis zu bestimmen, ob das Ausführen des Steuerprogramms erlaubt ist.

2. Steuersystem nach Anspruch 1, wobei
das Speichermittel konfiguriert ist, um Informationen (44), die die ersten eindeutigen Informationen enthalten, und einen Identifikator, der eine Sicherheitsengine, welche die ersten eindeutigen Informationen erzeugt hat, identifizieren kann, als eine Transaktion zu verwalten, wobei die ersten eindeutigen Informationen und der Identifikator einander zugeordnet sind.

3. Steuersystem nach Anspruch 1 oder 2, wobei
das Vergleichsmittel dazu ausgelegt ist, die zweiten eindeutigen Informationen, die durch die entsprechende Steuervorrichtung erzeugt wurden, mit den gemeinsam genutzten Informationen, die in der Sicherheitsengine der entsprechenden Steuervorrichtung gespeichert sind, zu vergleichen (SQ108A, SQ104A).

4. Steuersystem nach Anspruch 1 oder 2, wobei
das Vergleichsmittel konfiguriert ist, um die zweiten eindeutigen Informationen, die durch die entsprechende Steuervorrichtung erzeugt wurden, mit jedem Element der gemeinsam genutzten Informationen, das in jeder aus zumindest zwei Sicherheitsengines gespeichert ist, zu vergleichen und ein Vergleichsergebnis beruhend auf einem Ergebnis des Vergleichs mit jedem Element der gemeinsam genutzten Informationen zu erhalten (SQ108A-4 bis SQ108-10, SQ108A-4' bis SQ108A-9').

5. Steuersystem nach einem der Ansprüche 1 bis 4, wobei
jede aus den Steuervorrichtungen eine Vielzahl von Vorrichtungen (100, 200, 300, 400) umfasst und
die Vielzahl von Vorrichtungen eine Steuereinheit (100), welche die Steuerengine aufweist, und eine Sicherheitseinheit (200), welche die Sicherheitsengine aufweist, umfasst.

6. Steuersystem nach Anspruch 5, wobei
die Sicherheitseinheit ein Systemprogramm (2082) umfasst, das konfiguriert ist, um eine Basisfunktion der Sicherheitseinheit zu implementieren, und
das Systemprogramm ein Programm umfasst, das, wenn es durch die Steuervorrichtung ausgeführt wird, bewirkt, dass die Steuervorrichtung die Sicherheitsengine implementiert.

7. Steuersystem nach einem der Ansprüche 1 bis 6, wobei
wenn das Vergleichsergebnis, das als Ergebnis der Vergleichsanfrage erhalten wurde, welche als Antwort auf die Anfrage bezüglich des Startens des Ausführens des Steuerprogramms an das Vergleichsmittel der entsprechenden Steuervorrichtung ausgegeben wurde, eine vorgeschriebene Voraussetzung erfüllt, das Erlaubnismittel konfiguriert ist, um die Vergleichsanfrage an das Vergleichsmittel einer anderen aus den Sicherheitsengines auszugeben (SQ104a, SQ106a).

8. Steuervorrichtung (10X, 10), die in der Lage ist, mit anderen Steuervorrichtungen des Steuersystems nach Anspruch 1 zu kommunizieren, wobei die Steuervorrichtung Folgendes umfasst:
eine Steuerengine (142X, 1082), die konfiguriert ist, um ein Steuerprogramm zum Steuern eines Steuerziels auszuführen, und
eine Sicherheitsengine (230X, 230), die konfiguriert ist, um zu verwalten, ob das Ausführen des Steuerprogramms durch die Steuerengine zulässig ist, und
wobei die Sicherheitsengine Folgendes umfasst:
ein Erzeugungsmittel (234X, 234), das konfiguriert ist, um eindeutige Informationen zu erzeugen, die eine Konfiguration der entsprechenden Steuervorrichtung angeben, wobei die eindeutigen Informationen Informationen sind, die beruhend darauf definiert sind, dass eine Vorrichtung oder eine Vielzahl von Vorrichtungen die entsprechende Steuervorrichtung bildet,
ein Speichermittel (236X, 236), das konfiguriert ist, um gemeinsam genutzte Informationen (30X, 30), welche zumindest erste eindeutige Informationen (48) enthalten, die vor einer Vergleichsanfrage durch das entsprechende Erzeugungsmittel für jede aus den Steuervorrichtungen erzeugt wurden, in Form eines verteilten Registers zu speichern,
ein Vergleichsmittel (238X, 238), das konfiguriert ist, um als Antwort auf die Vergleichsanfrage zweite eindeutige Informationen (48), die durch das entsprechende Erzeugungsmittel der entsprechenden Steuervorrichtung erzeugt wurden, mit den ersten eindeutigen Informationen über die entsprechende Steuervorrichtung, die in zumindest einem in jeder der Sicherheitsengines gespeicherten Element der gemeinsam genutzten Informationen enthalten sind, zu vergleichen, und
ein Erlaubnismittel (232X, 232), das konfiguriert ist, um als Antwort auf eine Anfrage bezüglich des Startens des Ausführens des Steuerprogramms die Vergleichsanfrage an jede aus zumindest zwei Vergleichsmitteln auszugeben und beruhend auf einem von jedem aus den zumindest zwei Vergleichsmitteln erhaltenen Vergleichserlebnis zu bestimmen, ob das Ausführen des Steuerprogramms erlaubt ist.

9. Verwaltungsverfahren, das durch ein Steuersystem (1X, 1) durchgeführt wird, welches eine Vielzahl von Steuervorrichtungen umfasst, die in der Lage sind, miteinander zu kommunizieren, wobei das Verwaltungsverfahren Folgendes umfasst:
Erzeugen von ersten eindeutigen Informationen, die eine Konfiguration der entsprechenden Steuervorrichtung angeben, durch jede aus der Vielzahl von Steuervorrichtungen, wobei die eindeutigen Informationen Informationen sind, die beruhend darauf definiert sind, dass eine Vorrichtung oder eine Vielzahl von Vorrichtungen die entsprechende Steuervorrichtung bildet (1);
Speichern von gemeinsam genutzten Informationen, welche zumindest erste eindeutige Informationen enthalten, die vor jeder aus den Steuervorrichtungen erzeugt wurden, in Form eines verteilten Registers;
durch eine Steuervorrichtung, die eine Anfrage bezüglich des Startens des Ausführens eines Steuerprogramms zum Steuern eines Steuerziels erhalten hat, Ausgeben einer Vergleichsanfrage an zumindest zwei Steuervorrichtungen, welche die gemeinsam genutzten Informationen speichern (2, 3),
durch jede aus den Steuervorrichtungen, welche die Vergleichsanfrage erhalten haben, Erzeugen von zweiten eindeutigen Informationen, die die Konfiguration der entsprechenden Steuervorrichtung angeben, wobei die eindeutigen Informationen Informationen sind, die beruhend darauf definiert sind, dass eine Vorrichtung oder eine Vielzahl von Vorrichtungen die entsprechende Steuervorrichtung bildet (4), (5);
durch jede aus den Steuervorrichtungen, welche die Vergleichsanfrage erhalten haben, Vergleichen der zweiten eindeutigen Informationen, die durch die entsprechende Steuervorrichtung erzeugt wurden, mit den ersten eindeutigen Informationen über die entsprechende Steuervorrichtung, die in zumindest einem in jeder der Sicherheitsengines gespeicherten Element der gemeinsam genutzten Informationen enthalten sind (6); und
Erlauben des Ausführens des Steuerprogramms, wenn ein Vergleichsergebnis, das von jeder aus den Steuervorrichtungen, die die Vergleichsanfrage empfangen hat, erhalten wurde, eine vorgeschriebene Voraussetzung erfüllt (7), (8).

## Revendications

1. Système de commande (1X, 1) comprenant une pluralité de dispositifs de commande (10X, 10) capables de communiquer entre eux, dans lequel
chacun des dispositifs de commande comprend
un moteur de commande (142X, 1082) conçu pour exécuter un programme de commande afin de commander une cible de commande, et
un moteur de sécurité (230X, 230) conçu pour gérer si l'exécution du programme de commande par le moteur de commande est autorisée, et
chacun des moteurs de sécurité comprend
des moyens de création (234X, 234) conçus pour créer des informations uniques indiquant une configuration du dispositif de commande respectif, dans lequel les informations uniques sont des informations définies sur la base d'un ou d'une pluralité de dispositifs constituant le dispositif de commande respectif,
des moyens de stockage (236X, 236) conçus pour stocker des informations partagées (30X, 30) contenant au moins des premières informations uniques (48) créées avant une demande de comparaison par les moyens de création respectifs pour chacun des dispositifs de commande sous la forme d'un registre distribué permettant de partager les informations partagées avec les autres dispositifs de commande,
des moyens de comparaison (238X, 238) conçus pour comparer des deuxièmes informations uniques (48) créées par les moyens de création respectifs du dispositif de commande respectif en réponse à la demande de comparaison avec les premières informations uniques sur le dispositif de commande respectif contenues dans au moins une partie des informations partagées stockées dans chacun des moteurs de sécurité, et des moyens d'autorisation (232X, 232) conçus pour émettre, en réponse à une demande de démarrage de l'exécution du programme de commande, la demande de comparaison vers chacun d'au moins deux moyens de comparaison et déterminer si l'exécution du programme de commande est autorisée sur la base d'un résultat de comparaison obtenu de chacun desdits au moins deux moyens de comparaison.

2. Système de commande selon la revendication 1, dans lequel
les moyens de stockage sont conçus pour traiter, en tant que transaction unique, des informations (44) contenant les premières informations uniques et un identifiant qui peut identifier un moteur de sécurité qui a créé les premières informations uniques, les premières informations uniques et l'identifiant étant associés l'un à l'autre.

3. Système de commande selon la revendication 1 ou 2, dans lequel
les moyens de comparaison sont conçus pour comparer les deuxièmes informations uniques créées par le dispositif de commande respectif avec les informations partagées stockées dans le moteur de sécurité du dispositif de commande respectif (SQ108A, SQ104a).

4. Système de commande selon la revendication 1 ou 2, dans lequel
les moyens de comparaison sont conçus pour comparer les deuxièmes informations uniques créées par le dispositif de commande respectif avec chaque partie des informations partagées stockées dans chacun desdits au moins deux moteurs de sécurité et obtenir un résultat de comparaison basé sur un résultat de la comparaison avec chaque partie des informations partagées (SQ108A-4 à SQ108-10, SQ108A-4' à SQ108A-9').

5. Système de commande selon l'une quelconque des revendications 1 à 4, dans lequel
chacun des dispositifs de commande comprend une pluralité de dispositifs (100, 200, 300, 400), et
la pluralité de dispositifs comprend une unité de commande (100) ayant le moteur de commande et une unité de sécurité (200) ayant le moteur de sécurité.

6. Système de commande selon la revendication 5, dans lequel
l'unité de sécurité comprend un programme système (2082) conçu pour mettre en œuvre une fonction de base de l'unité de sécurité, et
le programme système comprend un programme qui, lorsqu'il est exécuté par le dispositif de commande, amène le dispositif de commande à mettre en œuvre le moteur de sécurité.

7. Système de commande selon l'une quelconque des revendications 1 à 6, dans lequel
lorsque le résultat de comparaison obtenu à la suite de la demande de comparaison émise vers les moyens de comparaison du dispositif de commande respectif en réponse à la demande de démarrage de l'exécution du programme de commande satisfait une condition prescrite, les moyens d'autorisation sont conçus pour émettre la demande de comparaison vers les moyens de comparaison d'un autre des moteurs de sécurité (SQ104a, SQ106a).

8. Dispositif de commande (10X, 10) capable de communiquer avec d'autres dispositifs de commande du système de commande selon la revendication 1, le dispositif de commande respectif comprenant :
un moteur de commande (142X, 1082) conçu pour exécuter un programme de commande pour commander une cible de commande ; et
un moteur de sécurité (230X, 230) conçu pour gérer si l'exécution du programme de commande par le moteur de commande est autorisée, dans lequel
le moteur de sécurité comprend
des moyens de création (234X, 234) conçus pour créer des informations uniques indiquant une configuration du dispositif de commande respectif, dans lequel les informations uniques sont des informations définies sur la base d'un ou d'une pluralité de dispositifs constituant le dispositif de commande respectif,
des moyens de stockage (236X, 236) conçus pour stocker des informations partagées (30X, 30) contenant au moins des premières informations uniques (48) créées avant une demande de comparaison par les moyens de création respectifs pour chacun des dispositifs de commande sous la forme d'un registre distribué,
des moyens de comparaison (238X, 238) conçus pour comparer des deuxièmes informations uniques (48) créées par les moyens de création respectifs du dispositif de commande respectif en réponse à la demande de comparaison avec les premières informations uniques sur le dispositif de commande respectif contenues dans au moins une partie des informations partagées stockées dans chacun des moteurs de sécurité, et
des moyens d'autorisation (232X, 232) conçus pour émettre, en réponse à une demande de démarrage de l'exécution du programme de commande, la demande de comparaison vers chacun d'au moins deux moyens de comparaison et déterminer si l'exécution du programme de commande est autorisée sur la base d'un résultat de comparaison obtenu de chacun desdits au moins deux moyens de comparaison.

9. Procédé de gestion réalisé par un système de commande (1X, 1) incluant une pluralité de dispositifs de commande capables de communiquer entre eux, le procédé de gestion comprenant :
la création, par chacun de la pluralité de dispositifs de commande, de premières informations uniques indiquant une configuration du dispositif de commande respectif, dans lequel les informations uniques sont des informations définies sur la base d'un ou d'une pluralité de dispositifs constituant le dispositif de commande respectif (1) ;
le stockage d'informations partagées contenant au moins les premières informations uniques créées par chacun des dispositifs de commande sous la forme d'un registre distribué ;
l'émission, par un dispositif de commande qui a reçu une demande de démarrage de l'exécution d'un programme de commande pour commander une cible de commande, d'une demande de comparaison vers au moins deux dispositifs de commande stockant les informations partagées (2), (3) ;
la création, par chacun des dispositifs de commande qui a reçu la demande de comparaison, de deuxièmes informations uniques indiquant la configuration du dispositif de commande respectif, dans lequel les informations uniques sont des informations définies sur la base d'un ou d'une pluralité de dispositifs constituant le dispositif de commande respectif (4), (5) ;
la comparaison, par chacun des dispositifs de commande qui a reçu la demande de comparaison, des deuxièmes informations uniques créées par le dispositif de commande respectif avec les premières informations uniques sur le dispositif de commande respectif contenues dans au moins une partie des informations partagées stockées dans chacun des dispositifs de commande (6) ; et
l'autorisation, lorsqu'un résultat de comparaison obtenu de chacun des dispositifs de commande qui a reçu la demande de comparaison satisfait une condition prescrite, de l'exécution du programme de commande (7), (8).
